# EUROPEAN PATENT APPLICATION

(11) **EP 1 592 168 A1**
(43) Date of publication of application: **02.11.2005**
(21) Application number: 05103440.3
(22) Date of filing: 27.04.2005
(51) Int. Cl.: H04L 12/24, H04L 29/06

(54) **System and methods for policy conformance verification in communication networks**

(30) Priority: 27.04.2004 US 565525 P; 27.10.2004 US 973970
(71) Applicant: MICROSOFT CORPORATION, Redmond, Washington 98052-6399 (US)
(72) Inventor: Palekar, Ashwin, Redmond WA 98052 (US); Choe, Calvin Choon-Hwan, Redmond WA 98052 (US); Lewis, Elliot D., Redmond WA 98052 (US); Berk, Hakan, Redmond WA 98052 (US); Bradic, Ljubomir, Redmond WA 98052 (US); Gidwani, Narendra C., Redmond WA 98052 (US); Moore, Timothy M., Redmond WA 98052 (US); Kamath, Vivek P., Redmond WA 98052 (US)
(74) Representative: Grünecker, Kinkeldey, Stockmair & Schwanhäusser Anwaltssozietät

(57) **Abstract**

A system and method for ensuring that machines having invalid or corrupt states are restricted from accessing network resources are provided. A quarantine coordination client (QCC) located on a client machine acquires statements of health from a plurality of quarantine policy clients. The QCC packages the statements and provides the package to a quarantine enforcement client (QEC). The QEC sends the package to a quarantine enforcement server (QES) with a request for network access. The QES passes the package to a quarantine coordination server (QCS) that disassembles the package and passes the individual statements of health to corresponding quarantine policy servers (QPS). The QPSs validate the statements of health and inform the QCS of the result. If the client provided valid statements of health, the QES grants the client access to the network.

## Description

This application claims priority to United States Provisional Application No. 60/565,525 filed April 27, 2004.

### FIELD OF THE INVENTION

The present invention relates generally to network access management, and relates more particularly to checking the security state of clients before allowing them access to network resources.

### BACKGROUND OF THE INVENTION

In computer networks, clients, servers, and peers commonly use trust models and mechanisms to ensure that unauthorized users do not gain access to network resources such as files, printers, other computers, or anything accessible on the network. These trust models and mechanisms are used to identify those users that are not malicious. However, it is possible that a user's machine poses a danger to the network without the user's knowledge. For example, a machine could contain a virus, or possess a security hole of which the user is unaware. Thus no matter how non-malicious the user is, the insecure state of the user's machine should be isolated from network until the security deficiencies are repaired. This security problem has particular application to three networking environments: Dynamic Host Configuration Protocol (DHCP), Virtual Private Networks (VPN), IEEE 802.1X, and Internet Protocol Security (IPsec).

DHCP is an Internet Protocol (IP) allocation specification whereby a server can allocate, or "lease," an IP address to a client for a specific amount of time. When a DHCP client attaches itself to the network for the first time, it broadcasts a DHCP DISCOVER packet. A DHCP server on the local segment intercepts the broadcast and returns a DHCP OFFER packet that contains an IP address and other information necessary for provisioning the client with network access. The client may receive multiple DHCP OFFER packets from several different servers, so it must choose between them, and broadcast a DHCP REQUEST packet that identifies the explicit server chosen. The chosen server would return a DHCPACK that tells the client the lease is finalized. If the offer is no longer valid for some reason-perhaps due to a timeout or another client allocating the lease-then the selected server must respond with a DHCPNAK message. This would cause the client to send another DHCPDISCOVER packet, starting the process over again.

If a client has obtained a network address through some other means (e.g., manual configuration), it may use a DHCPINFORM request message to obtain other local configuration parameters. Servers receiving a DHCPINFORM message construct a DHCPACK message with any local configuration parameters appropriate for the client. Once the client has the lease, it must be renewed prior to the lease expiration through another DHCP REQUEST message. If a client finishes using a lease prior to its expiration date, the client is sends a DHCP RELEASE message to the server so that the lease can be made available to other nodes. If the server does not hear from the client by the end of the lease, it marks the lease as non-renewed, and makes it available for other clients to use.

In conventional DHCP provisioning systems, the DHCP server may conduct an authentication procedure to ensure that clients requesting network access have verified credentials. For example, before providing the client with the DHCP OFFER, the DHCP server on an organization's local area network (LAN) requires an access code to demonstrate that a user has authorization to access the LAN. The authentication procedure prevents unauthorized or malicious users from gaining access to network resources. However, the conventional authentication procedure does not prevent non-secure, or even malicious, machines from accessing the network. A user may have valid authorization to access the network, but the user's machine can be infected with a virus, or contain a security hole, that should be corrected before the machine is allowed access the network.

Another environment where a machine with a bad security state poses a risk to the network is VPN. VPN is the extension of a private network that encompasses links across shared or public networks like the Internet. A VPN enables you to send data between two computers across a shared or public internetwork in a manner that emulates the properties of a point-to-point private link. The act of configuring and creating a virtual private network is known as virtual private networking. To emulate a point-to-point link, data is encapsulated, or wrapped, with a header that provides routing information allowing it to traverse the shared or public transit internetwork to reach its endpoint. To emulate a private link, the data being sent is encrypted for confidentiality. Packets that are intercepted on the shared or public network are indecipherable without the encryption keys. The portion of the connection in which the private data is encapsulated is known as the tunnel. The portion of the connection in which the private data is encrypted is known as the virtual private network (VPN) connection.

VPN also uses an authentication protocol. A network access server (NAS) sends to VPN client a challenge, which consists of a session ID and an arbitrary challenge string, to the remote client. The remote client must return the user name and an encrypted form of the challenge string, the session ID, and the MD4-hashed password. This design, which uses a hash of the MD4 hash of the password, provides an additional level of security because it allows the server to store hashed passwords instead of clear-text passwords. However, once again the conventional authentication procedure does not prevent non-secure, or even malicious, machines from accessing the network. A VPN client may present valid authentication, but the VPN client machine itself can be infected with a virus, or contain a security hole, that should be corrected before the machine is allowed access the VPN.

Yet another environment where user authentication is insufficient is the use of IPsec. IPsec defines two functions that ensure confidentiality: data encryption and data integrity. IPsec uses an authentication header (AH) to provide source authentication and integrity without encryption, and the Encapsulating Security Payload (ESP) to provide authentication and integrity along with encryption. With IPsec, only the sender and recipient know the security key. If the authentication data is valid, the recipient knows that the communication came from the sender and that it was not changed in transit.

IPsec can be envisioned as a layer below the TCP/IP stack. This layer is controlled by a security policy on each computer and a negotiated security association between the sender and receiver. The policy consists of a set of filters and associated security behaviors. If a packet's IF address, protocol, and port number match a filter, the packet is subject to the associated security behavior. The first such packet triggers a negotiation of a security association between the sender and receiver. Internet Key Exchange (IKE) is the standard protocol for this negotiation. During an IKE negotiation, the two computers agree on authentication and data-security methods, perform mutual authentication, and then generate a shared key for subsequent data encryption.

After the security association has been established, data transmission can proceed for each computer, applying data security treatment to the packets that it transmits to the remote receiver. The treatment can simply ensure the integrity of the transmitted data, or it can encrypt it as well. Data integrity and data authentication for IP payloads can be provided by an authentication header located between the IP header and the transport header. The authentication header includes authentication data and a sequence number, which together are used to verify the sender, ensure that the message has not been modified in transit, and prevent a replay attack.

However, once again the conventional authentication procedure does not prevent non-secure, or even malicious, machines from accessing the network. A computer may present valid authentication, but the machine itself can be infected with a virus, or contain a security hole, that should be corrected before the machine is allowed access the network resources of another computer.

IEEE 802.1 x is a standard for port-based network access control that provides authenticated network access to 802.11 wireless networks and wired Ethernet networks. Port-based network access control uses the physical characteristics of a switched local area network (LAN) infrastructure to authenticate devices that are attached to a LAN port and to prevent access to that port in cases where the authentication process fails.

During a port-based network access control interaction, a LAN port adopts one of two roles: authenticator or supplicant. In the role of authenticator, a LAN port enforces authentication before it allows user access to the services that can be accessed through that port. In the role of supplicant, a LAN port requests access to the services that can be accessed through the authenticator's port. An authentication server, which can either be a separate entity or co-located with the authenticator, checks the supplicant's credentials on behalf of the authenticator. The authentication server then responds to the authenticator, indicating whether the supplicant is authorized to access the authenticator's services.

The authenticator's port-based network access control defines two logical access points to the LAN, through one physical LAN port. The first logical access point, the uncontrolled port, allows data exchange between the authenticator and other computers on the LAN, regardless of the computer's authorization state. The second logical access point, the controlled port, allows data exchange between an authenticated LAN user and the authenticator. IEEE 802.1 x uses standard security protocols, such as Remote Authentication Dial-In User Service (RADIUS), to provide centralized user identification, authentication, dynamic key management, and accounting.

However, once again the conventional authentication procedure does not prevent non-secure, or even malicious, machines from accessing the network. A computer may present valid authentication, but the machine itself can be infected with a virus, or contain a security hole, that should be corrected before the machine is allowed access the network resources of another computer. Accordingly, the is a need in the art for a system and method to ensure that clients are not provisioned with network access until they are secure, and can prove their security state.

### BRIEF SUMMARY OF THE INVENTION

In view of the foregoing, the present invention provides network quarantine client for interacting with a server enforcing a quarantine policy, that comprises at least one enforcement client for communicating with the server through a network protocol; and a coordinating client for acquiring at least one statements of health from at least one policy client, wherein the coordinating client exposes an interface through which the at least on policy client communicate with the coordinating client, and wherein the coordinating client assembles the at least one statements of heath into statement of health list and provides the at least one enforcement client with the statement of health list. In one embodiment of the invention, the at least one enforcement client uses the statement of health list to gain access to network resources from the server. In keeping with the features of the invention, the at least one enforcement client is one of a Dynamic Host Control Protocol, a Virtual Private Network client, and an IPsec client. The coordinating client communicates with the at least one policy client through an interface provided by the at least one policy client. The coordinating client and enforcement client may be comprised in an operating system of a computer.

Another embodiment of the invention comprises a network quarantine server for enforcing a network quarantine policy, including at least one enforcement server for communicating with at least one client through a network protocol, and a coordinating server for receiving a list of statements of health, including at least one statement of health, from the enforcement server and querying at least one policy server to verify the at least one statement of health. If each statement of health is verified, the coordinating server instructs the at least one enforcement server to grant the at least one client access to network resources. If each statement of health is not verified, the coordinating server instructs the at least one enforcement server to enforce a quarantine policy acquired from the at least one policy server. In keeping with the features of the invention, the coordinating server exposes an interface through which the at least one policy server communicates with coordinating server. The coordinating server communicates with the at least one policy server through an interface provided by the at least one policy server.

In another embodiment of the invention, an application programming interface for allowing a policy client to communicate with a quarantine client is provided, comprising a bind call for binding the policy client to the quarantine client and a notification call to notify the quarantine client of a change in quarantine policy.

In still another embodiment of the invention, an application programming interface for allowing a quarantine client to communicate with a policy client is provided comprising a get call for getting a statement of health from the policy client.

In yet another embodiment of the invention, an application programming interface for allowing a policy server to communicate with a quarantine server is provided comprising a bind call for binding the policy client to the quarantine client and a response call for signaling that a statement of health is valid.

In a further embodiment of the invention, an application programming interface for allowing a quarantine server to communicate with a policy server is provided comprising a validate call for validating a statement of health by the policy server.
In a still further embodiment of the invention, a method for network quarantine management includes receiving from a remotely located Dynamic Host Control Protocol (DHCP) server a statement of health acquire from a client requesting a network resource, the statement of health reflecting the system state of the client; validating the statement of health; if the statement of health is valid, instructing the DHCP server to grant the request; and if the statement of health is invalid, instructing the DHCP server not grant the request and to place the client in quarantine.

Additional features and advantages of the invention are made apparent from the following detailed description of illustrative embodiments which proceeds with reference to the accompanying figures.

### BRIEF DESCRIPTION OF THE DRAWINGS

The accompanying drawings incorporated in and forming a part of the specification illustrate several aspects of the present invention, and together with the description serve to explain the principles of the invention. In the drawings:

Figure 1A is a schematic generally illustrating an exemplary network environment across which the present invention operates.

Figure 1B is a block diagram generally illustrating an exemplary computer system on which the present invention resides;

Figure 2 is a schematic overview of the components of the present invention;

Figure 3 illustrates a method of acquiring a bill of health in accordance with an embodiment of the invention;

Figure 4 illustrates the software components of an embodiment of the invention;

Figure 5 illustrates a method of a client to communicate with a server in accordance with an embodiment of the invention;

Figure 6 illustrates an exemplary interaction of the components of one embodiment of the invention;

Figure 7 illustrates a client/server architecture in accordance with one embodiment of the invention;

Figure 8 illustrates one embodiment of the invention using DHCP;

Figure 9 illustrates one embodiment of the invention using IPsec; and

Figure 10 illustrates an embodiment of the invention using multiple DHCP servers to provision a client.

While the invention will be described in connection with certain preferred embodiments, there is no intent to limit it to those embodiments. On the contrary, the intent is to cover all alternatives, modifications, and equivalents as included within the spirit and scope of the invention as defined by the appended claims.

### DETAILED DESCRIPTION OF THE INVENTION

Turning to the drawings, wherein like reference numerals refer to like elements, the present invention is illustrated as being implemented in a suitable computing environment. The following description is based on embodiments of the invention and should not be taken as limiting the invention with regard to alternative embodiments that are not explicitly described herein.

In the description that follows, the present invention is described with reference to acts and symbolic representations of operations that are performed by one or more computing devices, unless indicated otherwise. As such, it will be understood that such acts and operations, which are at times referred to as being computer-executed, include the manipulation by the processing unit of the computing device of electrical signals representing data in a structured form. This manipulation transforms the data or maintains them at locations in the memory system of the computing device, which reconfigures or otherwise alters the operation of the device in a manner well understood by those skilled in the art. The data structures where data are maintained are physical locations of the memory that have particular properties defined by the format of the data. However, while the invention is being described in the foregoing context, it is not meant to be limiting as those of skill in the art will appreciate that various of the acts and operations described hereinafter may also be implemented in hardware.

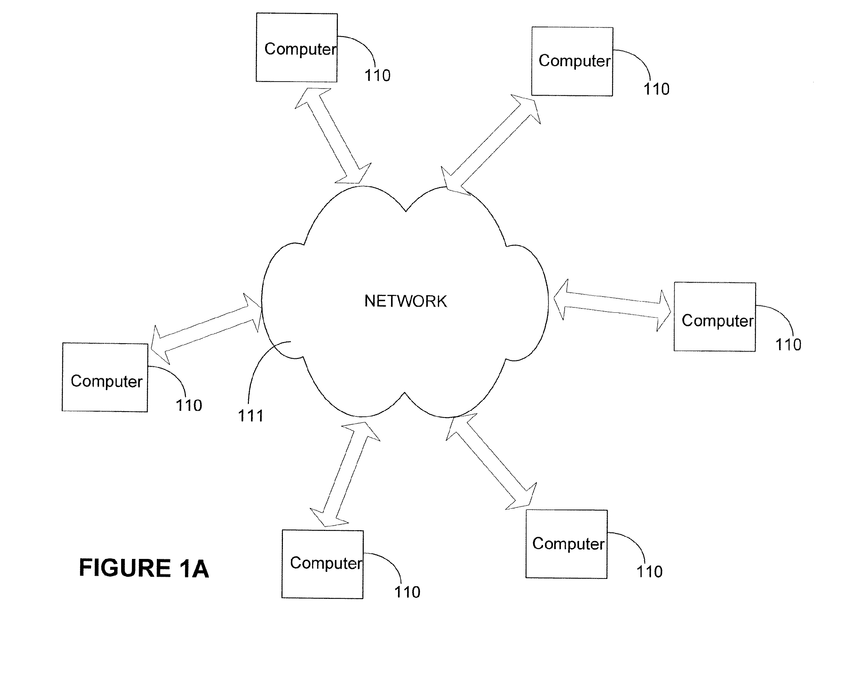

An example of a networked environment in which the invention may be used will now be described with reference to Figure 1 A. The example network includes several computers 110 communicating with one another over a network 111, represented by a cloud. Network 111 may include many well-known components, such as routers, gateways, hubs, etc. and allows the computers 110 to communicate via wired and/or wireless media. When interacting with one another over the network 111, one or more of the computers may act as clients, network servers, quarantine servers, or peers with respect to other computers. Accordingly, the various embodiments of the invention may be practiced on clients, network servers, quarantine servers, peers, or combinations thereof, even though specific examples contained herein do not refer to all of these types of computers.

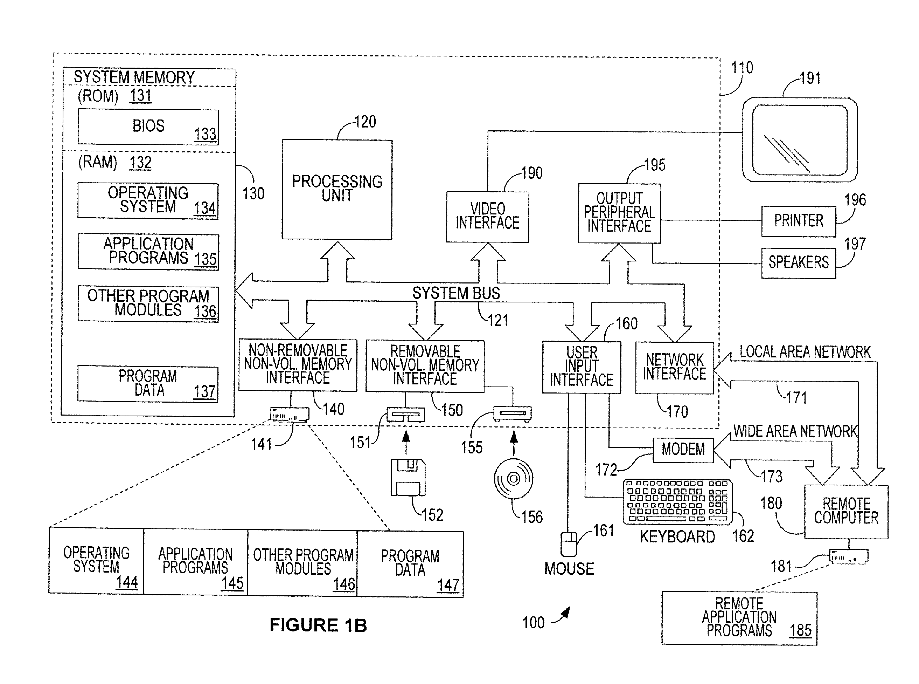

Figure 1B illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary computing environment 100.

The invention is operational with numerous other general-purpose or special-purpose computing system environments or configurations. Examples of well known computing systems, environments, and configurations that may be suitable for use with the invention include, but are not limited to, personal computers, server computers, hand-held or laptop devices, multiprocessor systems, microprocessor-based systems, set-top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc., that perform particular tasks or implement particular abstract data types. The invention may also be practiced in distributed computing environments where tasks are performed by remote processing devices that are linked through a communications network. In a distributed computing environment, program modules may be located in both local and remote computer-storage media including memory-storage devices.

With reference to Figure 1B, an exemplary system for implementing the invention includes a general-purpose computing device in the form of a computer 110, which may act as a client, network server, quarantine server, or peer within the context of the invention. Components of the computer 110 may include, but are not limited to, a processing unit 120, a system memory 130, and a system bus 121 that couples various system components including the system memory 130 to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture bus, Micro Channel Architecture bus, Enhanced ISA bus, Video Electronics Standards Associate local bus, and Peripheral Component Interconnect bus, also known as Mezzanine bus.

The computer 110 typically includes a variety of computer-readable media. Computer-readable media can be any available media that can be accessed by the computer 110 and include both volatile and nonvolatile media, removable and non-removable media. By way of example, and not limitation, computer-readable media may include computer storage media and communication media. Computer storage media include both volatile and nonvolatile, removable and non-removable media implemented in any method or technology for the storage of information such as computer-readable instructions, data structures, program modules, or other data. Computer storage media include, but are not limited to, RAM, ROM, EEPROM, flash memory or other memory technology, CD-ROM, digital versatile disks or other optical disk storage, magnetic cassettes, magnetic tape, magnetic disk storage or other magnetic storage devices, or any other medium which can be used to store the desired information and which can be accessed by the computer 110. Communication media typically embody computer-readable instructions, data structures, program modules, or other data in a modulated data signal such as a carrier wave or other transport mechanism and include any information-delivery media. The term "modulated data signal" means a signal that has one or more of its characteristics set or changed in such a manner as to encode information in the signal. By way of example, and not limitation, communication media include wired media such as a wired network or direct-wired connection and wireless media such as acoustic, RF, infrared, and other wireless media. Combinations of the any of the above should also be included within the scope of computer-readable media.

The system memory 130 includes computer storage media in the form of volatile and nonvolatile memory such as read only memory (ROM) 131 and random access memory (RAM) 132. A basic input/output system 133 (BIOS), containing the basic routines that help to transfer information between elements within the computer 110, such as during start-up, is typically stored in ROM 131. RAM 132 typically contains data and program modules that are immediately accessible to or presently being operated on by the processing unit 120. By way of example, and not limitation, Figure 1B illustrates an operating system 134, application programs 135, other program modules 136, and program data 137.

The computer 110 may also include other removable/non-removable, volatile/nonvolatile computer storage media. By way of example only, Figure 1B illustrates a hard disk drive 141 that reads from or writes to non-removable, nonvolatile, magnetic media, a magnetic disk drive 151 that reads from or writes to a removable, nonvolatile, magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary computing environment 100 include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as the interface 140, and the magnetic disk drive 151 and the optical disk drive 155 are typically connected to the system bus 121 by a removable memory interface, such as the interface 150.

The drives and their associated computer storage media discussed above and illustrated in Figure 1B provide storage of computer-readable instructions, data structures, program modules, and other data for the computer 110. In Figure 1B, for example, the hard disk drive 141 is illustrated as storing an operating system 144, application programs 145, other program modules 146, and program data 147. Note that these components can either be the same as or different from the operating system 134, application programs 135, other program modules 136, and program data 137. The operating system 144, application programs 145, other program modules 146, and program data 147 are given different numbers to illustrate that, at a minimum, they are different copies.

A user may enter commands and information into the computer 110 through input devices such as a keyboard 162 and a pointing device 161, commonly referred to as a mouse, trackball, or touch pad. Other input devices (not shown) may include a microphone, joystick, game pad, satellite dish, scanner, or the like. These and other input devices are often connected to the processing unit 120 through a user input interface 160 that is coupled to the system bus 121, but may be connected by other interface and bus structures, such as a parallel port, game port, or a universal serial bus. A monitor 191 or other type of display device is also connected to the system bus 121 via an interface, such as a video interface 190. In addition to the monitor 191, the computer 110 may also include other peripheral output devices such as speakers 197 and a printer 196 which may be connected through an output peripheral interface 195.

The computer 110 may operate in a networked environment using logical connections to one or more remote computers, such as a remote computer 180. The remote computer 180 may be another personal computer, a server, a router, a network PC, a peer device, or other common network node and typically includes many or all of the elements described above relative to the personal computer 110 although only a memory storage device 181 has been illustrated in Figure 1B. The logical connections depicted in Figure 1B include a local area network (LAN) 171 and a wide area network (WAN) 173 but may also include other networks. Such networking environments are commonplace in offices, enterprise-wide computer networks, intranets, and the Internet.

When used in a LAN networking environment, the personal computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160 or other appropriate mechanism. In a networked environment, program modules depicted relative to the personal computer 110, or portions thereof, may be stored in the remote memory storage device 181. By way of example, and not limitation, Figure 1B illustrates the remote application programs 185 as residing on the memory device 181. It will be appreciated that the network connections shown are exemplary, and other means of establishing a communications link between the computers may be used.

In the description that follows, the invention is described with reference to acts and symbolic representations of operations that are performed by one or more computers, unless indicated otherwise. As such, it will be understood that such acts and operations, which are at times referred to as being computer-executed, include the manipulation by the processing unit of the computer of electrical signals representing data in a structured form. This manipulation transforms the data or maintains them at locations in the memory system of the computer, which reconfigures or otherwise alters the operation of the computer in a manner well understood by those skilled in the art. The data structures where data are maintained are physical locations of the memory that have particular properties defined by the format of the data. However, while the invention is being described in the foregoing context, it is not meant to be limiting as those of skill in the art will appreciate that various of the acts and operations described hereinafter may also be implemented in hardware.

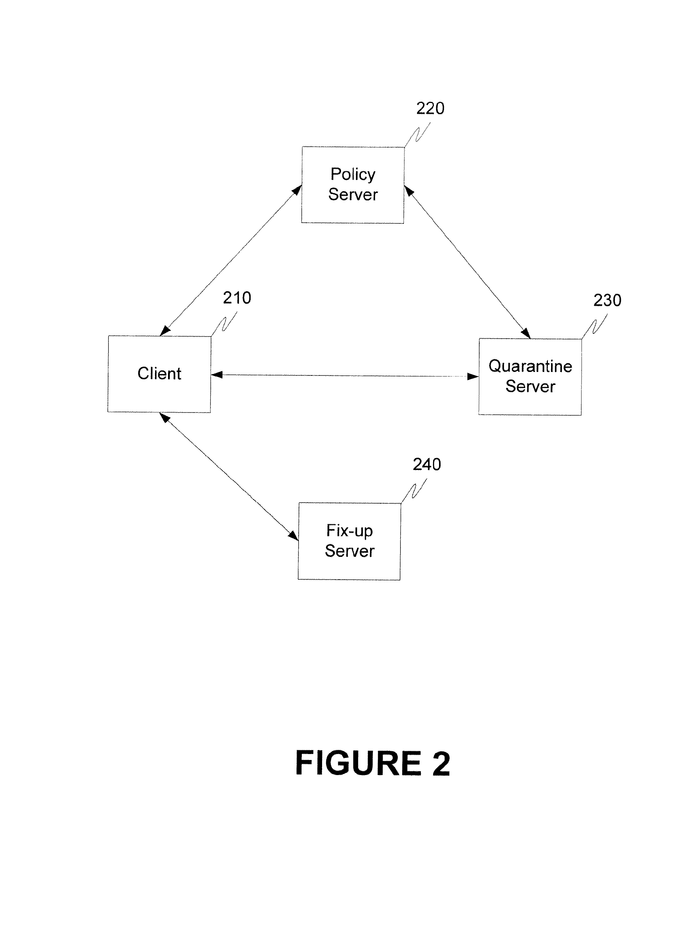

With reference to Figure 2, one embodiment of the invention comprises at least three computers: the Client 210, the policy server 220, and the quarantine enforcement server (QES) 230. There are two versions of Client 210 to QES 230 machine interaction, where the interaction consists of List of Statement of Healths (SoHs) and SoH Responses and where the interaction consists of a Bill of Health (BoH). Another embodiment of the invention further includes Fix-up server 240 for providing the Client 210 with software and patch updates necessary to bring the Client into conformance with policies downloaded from the policy server 220.

The policy server 220 contains inspection policies that the administrator wants the client to check, e.g. operating system (OS) version, anti-virus signature version, etc. Examples of policy servers are a Windows® Update Server (WUS) and an anti-virus signature update server. The policy server also changes information that the client needs to change the client into the correct configuration, e.g. patches, anti-virus updates, etc. A network may contain multiple policy servers, that is, there may be one policy server for patches and another policy server for anti-virus service. The administrator for policy of client inspection and configuration can change the policy for this on the policy servers. The policy server downloads to the Client the inspection policy and fix-up changes that the policy administrator configures into the policy server. The policy server allows the QES 230 to check that the SoH from the Client 210 is valid.

A policy administrator sets policy to be applied to the client on the policy server 220. This policy is downloaded and applied to the Client 210. When the Client 210 makes network resource requests, e.g. DHCP, 802.1X, etc., the Client 210 supplies a List of SoHs along with the request. The QES 230 validates these SoHs, contacting the policy server 220 to obtain the expected client policy and returns a response for the network resource and a List of SoH Responses. The Network Administrator can configure the quarantine policy on the QES 230. The User on the Client 210 is informed if the machine is denied network resources due to quarantine reasons and can request for more detailed information as to what the client is doing to fix the problem. The User can also request for support information.

A Client 210 may communicate with one or more policy servers, i.e., a client may be obtaining policy and configuration from multiple different policy servers, e.g. WUS server for patches and an anti-virus signature server. The Client 210 also communicates with one or more QESs 230, to request for a network resource. The Client displays a balloon and an icon in the systray to the user if the client is quarantined. The User can request for details on the quarantine status. This includes which policies are up to date. The User can request to see the support information for quarantine. The Client 210 requests for a network resource, including DHCP Discover, Request, 802.1X authentication, VPN authentication and IPsec IKE exchanges. The Client 210 supplies its List of SoHs and the QES 230 validates the List of SoHs to decide how much access to the network resource is given. The QES responds to the request for a network resource with full access to the network resource or limited access to the network resource.

The QES 230 receives network requests from Clients, e.g. DHCP requests, 802.1 X authentication requests, IPsec SA requests, etc. As part of this network request, the Client 210 sends one or more SoHs. There is one SoH for each type of policy, e.g. there is one SoH describing the state of heath for patches, there is another SoH describing the state of heath for anti-virus, etc. The QES 230 validates each SoH if necessary by communicating with the Policy Server for that particular type of policy. A Client 210 communicates with more than one QESs 230 under two cases: when multiple types of QESs 230 are deployed (e.g. 802.1 X RADIUS servers and DCHP servers) and when the protocol between the Client 210 and QES 230 supports multiple QESs of one type (e.g. DHCP sends broadcasts a DHCP Discover to which multiple DHCP QESs may respond). The Network Administrator can configure the QES 230 for the policy servers it uses to validate SoHs from Client machines as well as the amount of access when the validation succeeds or fails.

A Fix-up server 240 may be any server that can be used to correct the state of a machine, i.e. provide information to change the state of a machine so that it is no longer quarantined. The information may be software or configuration information. Since a quarantined machine cannot communicate with a non-quarantined machine, the fix-up servers available from the quarantined network. The fix-up servers will normally be available to communicate with machines that are not quarantined as well. By way of example and not limitation, examples of fix-up servers are: (1) www.windowsupdate.com, where Microsoft distributes Windows OS Security Updates, and the client update service and the WUS client can download Security Updates from this location. If Windows update is to be used as a fix-up server then the Internet needs to be accessible to quarantined machines either directly or via a browser proxy. (2) SMS servers, from where the SMS client downloads configuration information, scripts and software. (3) Domain controllers, which have a variety of methods to deploy configuration to client machines. If one of these methods is used then a Domain controller is a fix-up server and needs to be accessible by quarantined machines.

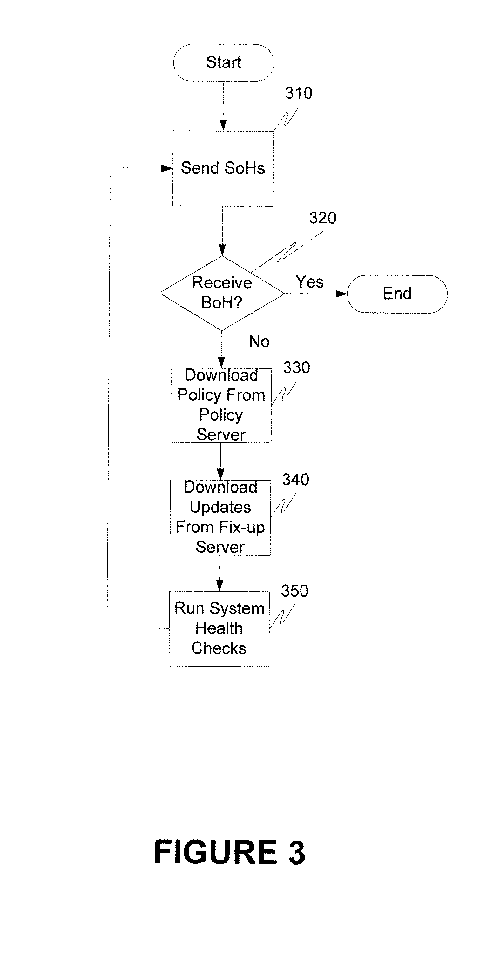

Figure 3 illustrates the interactions among the Client 210, the policy server 220, the QES 230, and the Fix-up server 240. At step 310, the Client sends the QES a list of SoHs indicating security and software states of the Client. At step 320, if the Client receives a SoH Response that includes a BoH, the Client is finished and may now exit quarantine. However, if the SoH Response does not include a BoH, the Client downloads policy updates from the policy server at step 330. Based on these policies, the Client then downloads the necessary updates from the Fix-up server at step 340. The Client then runs system health checks at step 350 to generate a new SoH list. The process then returns to step 310 to reattempt BoH acquisition.

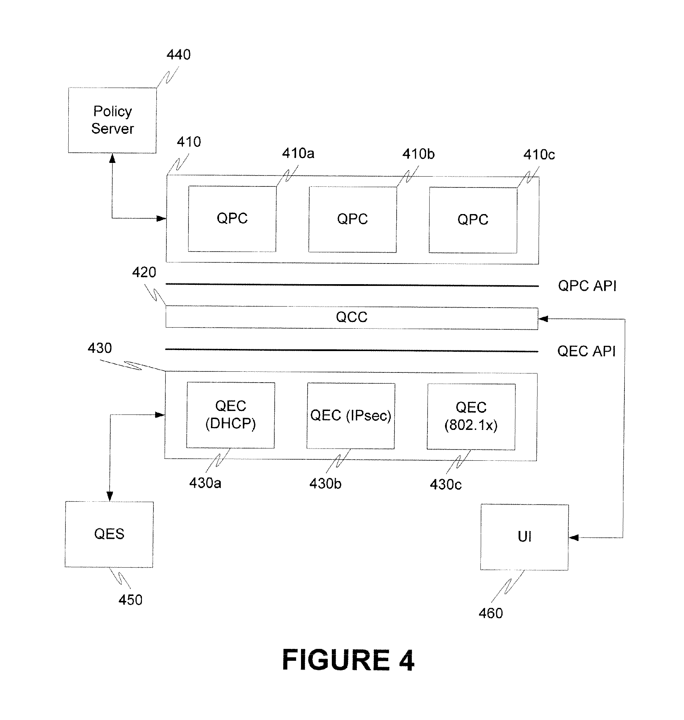

Turning attention to Figure 4, the Client machine consists of three software components, the Quarantine Policy Client (QPC) 410, the Quarantine Coordination Client (QCC) 420, and the Quarantine Enforcer Client (QEC) 430. A Client machine may contain one or more QPSs, e.g. QPC 410a, QPC 410b, and QPC 410c. Each QPC communicates with one or more policy servers 440 and that provides the policies and configurations for the network. The QPC is supplied by the same entity that provides the one or more policy servers 440, since it must understand the types of policies and configurations that the policy server 440 provides. Each QPC supplies an SoH to the QCC 420. The QPCs also notify the QCC 420 when their SoH changes, e.g. since the QPC is communicating with its policy server 440, the policy server 440 may change the required configuration and inspection requirements. The QPC 410 will execute this new policy and produce a different SoH. There is a single QCC that collects the SoHs from the various QPCs. vThe QCC 420 caches these SoHs in case a QPC is not available (e.g. machine boot). The QCC 420 provides the List of SoHs to one or more QECs 430 on demand from the QECs.

A Client machine may contain one or more QECs, e.g. a QEC for DHCP 430, a QEC for IPsec 430b, and a QEC for 802.1X 430c. Each QEC communicates with a QES 450. A QEC 430 is normally an existing component that communicates using a protocol that makes a request for a network resource. Quarantine is implemented by limiting the resources obtained by carrying information about the state of health of the client over the QEC 430 to QES protocols, examples of which are DHCP, PEAP for IEEE 802.1 X and VPN and IPsec. For DHCP, the DHCP protocol carries the List of SoHs. When a QEC 430 needs to make a network request, it obtains the List of SoHs from the QCC 420.

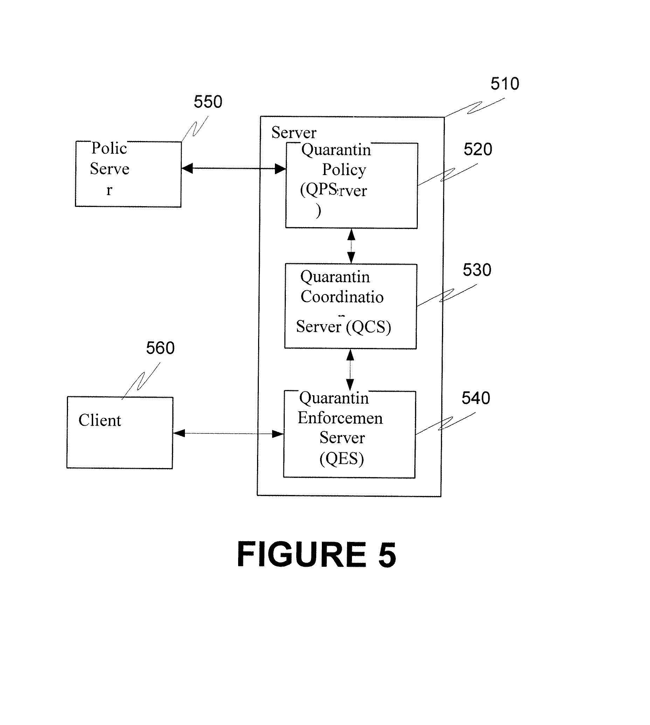

With reference to Figure 5, the Client 560 can communicate with Quarantine Server (QS) 510 by sending a List of SoHs to the protocol-specific Quarantine Enforcement Server (QES) 540, which passes the List to the QCS 530. The QS 510 can communicate with one or more policy servers 550 to obtain policy updates for the Quarantine Policy Servers (QPS) 520. The QCS 530 may then determine whether a BoH should be issued by sending the List ofBoHs to the one or more QPSs 520 to validate the SoHs. The QPS 520 sends a SoH Response to the QCS 530 who gives it to the appropriate QES 540, who then sends it to the Client 560. If a BoH is to be issued, the QCS 530 includes a BoH with the SoH Response.

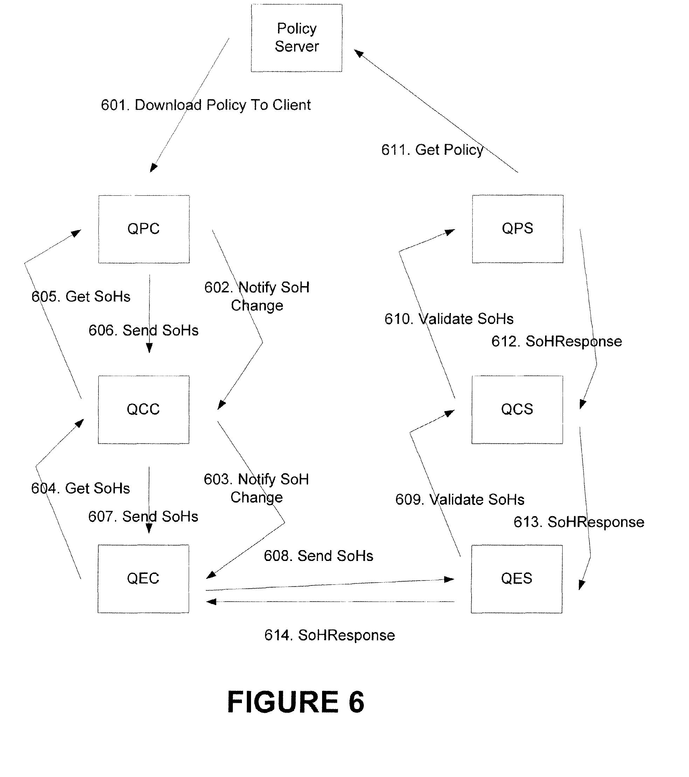

Figure 6 illustrates an exemplary interaction of the components of one embodiment of the invention. At step 601, the QPC downloads updated policy to the client. The policy downloaded is specific to the type of QPC, e.g. a patch client or an anti-virus client. At step 602, the QPC notifies the QCC of a policy change regarding that QPC's policy. At step 603, the QCC notifies one or more QECs of a change in policy. The QEC then requests the List of SoHs from the QCC at step 604. The QCC requests all of the SoHs from the one or more QPCs at step 605. Each QPC sends its SoH at step 606. The QCC then forwards the List of SoHs to the QECs at step 607. At step 608, a QEC communicates the List of SoHs to a QES of a QS, and requests a BoH. The QES requests validation of the SoHs at step 609. The QCS receives the SoHs and forwards each SoH to the appropriate QPS for validation. If the QPS does not have the current policies, it then downloads them from a policy server at step 611. The QPS then validates the SoH and forwards the result as an SoH Response to the QCS at step 612. The QCS collects the SoH Responses and forwards them to the QES at step 613, so that the QES may forward the SoH Responses to the appropriate QEC according to their shared protocol at step 614. If the SoHs were validated, the QCS further includes a BoH with the SoH Responses.

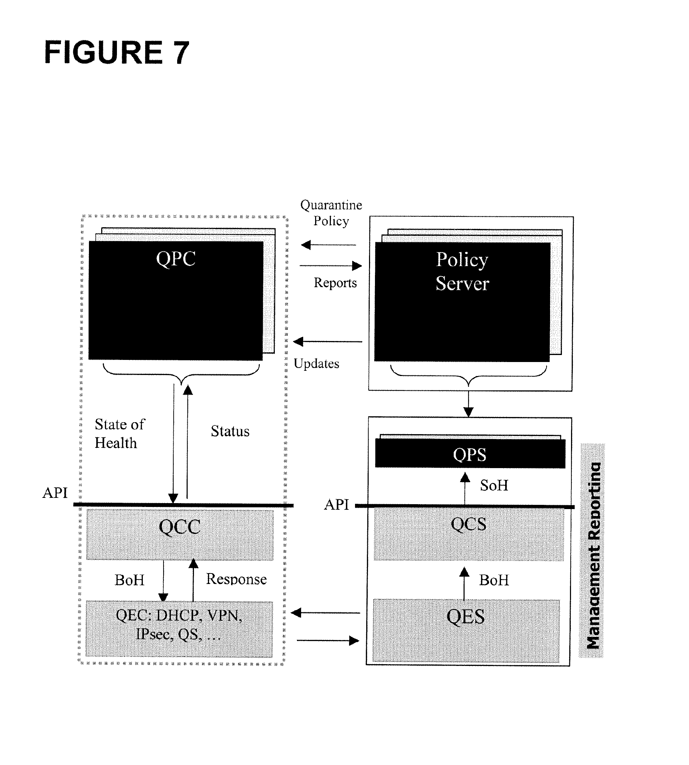

Furthermore, with reference to Figure 7, the overall architecture consists of components that act as a client and components that act as a server (note client and server components may be on the same machine, e.g. IPsec can be a client when making requests to a peer and be a server when accepting requests from a peer). The QPCs obtain and may change the state of the machine, i.e., they obtain the state of the machine that the administrator has decided that makes the machine "Healthy" or "Unhealthy". The QPCs provide to the QCC a SoH. The QCC stores in information for when the QECs need the client's SoH. Whenever a QEC needs to make a network request it obtains the SoHs from the QCC and sends them to the QEC's QES. The QES passes the SoHs to the QCS. The QCS passes the SoHs to the correct QPSs. The Policy server/QPS checks the state of the machine and informs the QCS whether the client machine is "Healthy" or "Unhealthy". The QEC and QES are various technologies that can allow or disallow access to network resources, e.g. VPN, DHCP, and IPsec. The QES component gives or denies network resources depending on whether the QCS decides the client machine is "Healthy" or "Unhealthy" and a policy decision on whether the enforcers should act or not, i.e., a QCS may choose to log the results from the QPS but return success regardless of the results from the QPSs.

It is not required that every QPS has a matching QPC. The QCS calls every QPS that made a "Bind" call to the QCS. If a SoH Is not available for the QPS an empty SoH is passed and an empty SoH Response is returned. In addition to the QES being a network technology that supplies or denies a network resource, a QES can also be a standalone Quarantine server. In this role the Quarantine server QES can accept the QPC's "State of Health," validate the various SoHs, and return to the QCC a BoH that can be used by other QEC/QESs without the QESs necessarily needing to use its own QPSs to validate the state of the client's machine.

The protocol used between the QPC and policy server is dependent on the QPC and policy server (e.g. WUS defines its own protocol). The protocol used between QCC and QCS carries SoHs and SoH Response buffers. The protocol is carried over the enforcer protocol. The protocol used between QEC and QES depends on the enforcer technology. DHCP QEC/QES uses the DHCP protocol. The SoHs and SoH Response are carried over a DHCP vendor option. PEAP QEC/QES uses the PEAPv2 protocol. The SoHs and SoH Response are carried over PEAP TLVs. The SoHs and SoH Responses may also be carried over SOAP as XML

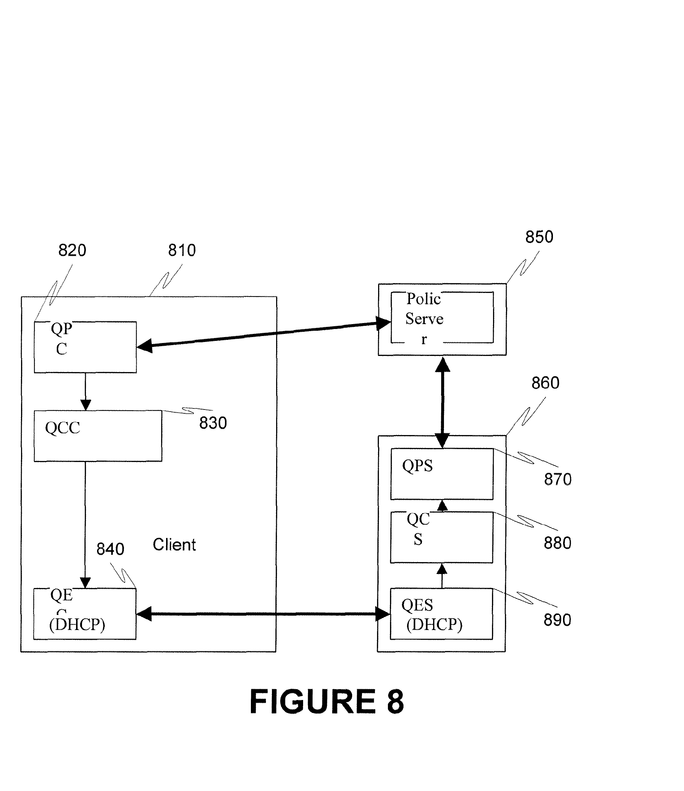

Turning attention to Figure 8, in one embodiment of the invention the QEC/QES communicate using DHCP. DHCP Quarantine does not give the machine a default gateway address but static routes to selected machines such as the DHCP, DNS, and patch servers (e.g. WUS). It also sets the netmask for the IP address supplied to 255.255.255.255 so no route to the normal local subnet exists. Therefore when an application attempts to send to any other IP address than those allowed, a destination unreachable error will occur in the TCP/IP stack. The DHCP server can include the QPSs within the machine since it is a managed machine.

The QPC and QPS/Policy server 850, e.g. SMS or WUS, can transfer the policy for the client 810 from the server 860 to the client 810. The QPC 820 will poll the server at predefined intervals for updates. The QPC 820, whenever the "State of Health" of the machine changes, will publish to the QCC 830 its SoH. The QCC 830 will collect the SoHs from each of the QPCs 820 into a list of SoHs. The QCC 830 notifies all QECs whenever a SoH has changed. When QEC (DHCP client) 840 wants to request an IP address or a renewal of an IP address, it obtains the list of SoHs from the QPCs and SoH cache via the QCC 830 and passes it to the QES (DHCP server) 890 using one or more DHCP options. The QES (DHCP Server) 890 gives the list of SoH to the QCS 880 which passes each SoH to the correct QPS 870. Each QPS 870 may contact its Policy Server 850 to validate that the SoH for the client is correct and current for that client, e.g. there are no patches to be installed on this client. If the client is current and correct, the QPS 870 returns success to the QCS 880. If all QPSs return success to the QCS 880, the QCS 880 returns success to the QES (DHCP Server) 890. The QES (DHCP server) 890 then returns the correct DHCP options to the QEC (DHCP client) 840, including a BoH.

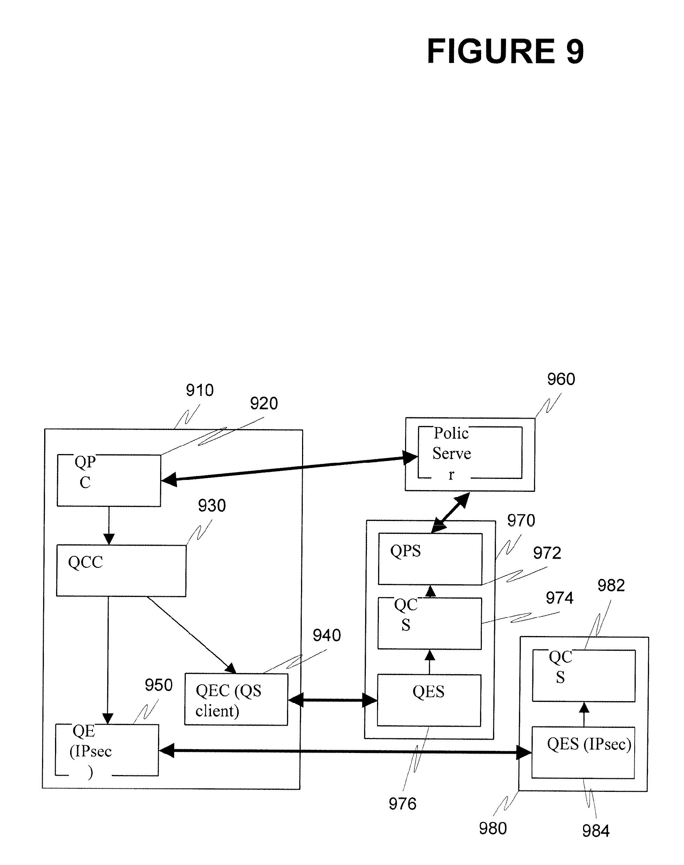

Turning attention to Figure 9, in one embodiment of the invention the QEC/QES communicate using IPsec protocol. IPsec Quarantine enforcement works by rejects setting up an IPsec SA from a client machine in Quarantine. A machine not in Quarantine will not accept an IPsec SA from a machine in Quarantine. A quarantine system needs a method to exempt some machines and devices. The quarantine client is only supported on some OSs, machines running other OSs are either always Quarantined or the network administrator must accept that this machine will not run policy checks bit still will be allowed to communicate to non quarantined machines. Since IPsec clients request network resources directly from another client, the peer IPsec client cannot use the QPSs directly. The QCC must use a Quarantine Server QEC to obtain a BoH which will be a X.509 certificate that IPsec can pass to the peer in IKE without changing IKE

The QPC and QPS/Policy server (e.g. SMS or WUS) 960; will communicate the policy for the client 910 from the server 970 to the client 910. The QPC 920 will poll the policy server at regular intervals for updates. The QPC 920, whenever the "State of Health" of the machine changes, will publish to the QCC 930 its SoH. The QCC 930 will collect the SoHs from each of the QPCs into a list of SoHs. The QCC 930 notifies all QECs whenever a SoH has changed. The QS QEC 940 on receiving this notification obtains the SoHs and sends it to the QS QES 976. The Quarantine Server QES 976 gives the list of SoHs to the QCS 974 which passes each SoH to the correct QPS 972. Each QPS may contact its Policy Server 960 to validate that the SoH for the client is correct and current for that client, e.g. there are no patches to be installed on this client. If the client is current and correct, the QPS 972 returns success to the QCS 974. If all QPSs return success to the QCS 974, the QCS 974 returns success to the Quarantine Server QES 976. The Quarantine server QES 976 returns a BoH to the QS QEC 940 if the QCS 974 returned success to it. The QS QEC 940 then returns the BoH to the QCC 930 which caches it. The QCC 930 then sends a notification to all enforcers that the BoH has changed. When IPsec is requested to setup an IKE SA to a peer, the QEC (IPsec) 950 obtains the BoH from the BoH cache and passes it to the QES (IPsec) 984 of the peer 980. The QES (IPsec) 984 passes the BoH to the QCS 982 who validates it and returns success (if validated) to the QES (IPsec) 984, who then accepts the remote IKE communication.

In another embodiment of the invention, the system uses VPN enforcement. VPN enforcement works by putting IP filters on the VPN server if the client should be in quarantine such that the only servers that can be reached through the VPN server are the DNS, DHCP and fix-up servers. The Quarantine exchange of SoH and SoH Response is carried out as an EAP exchange without a new EAP method which is chained in PEAPv2 after any required user or machine authentication. The overall EAP session will not complete until the PEAP session including the embedded EAP authentication and EAP quarantine sessions complete. The overall EAP session completes successfully if the PEAPv2 session completes successfully. The PEAPv2 session completes successfully if all the embedded EAP methods complete successfully. The order that the embedded EAP methods are run is driven by the RADIUS server which is configured with which EAP methods must execute successfully and in which order. The client PEAP will be configured with which embedded EAP methods are allowed to be request by the RADIUS server.

In yet another embodiment of the invention, the system uses IEEE 802.1X enforcement. IEEE 802.1X enforcement in Hawaii uses the PEAPv2 protocol carried in EAP which is carried in IEEE 802.1X. IEEE 802.1X enforcement works by putting IP filters on the NAS (Ethernet switches or Wireless access points) if the client should be in quarantine such that the only servers that can be reached through the NAS are the DNS, DHCP and fix-up servers.

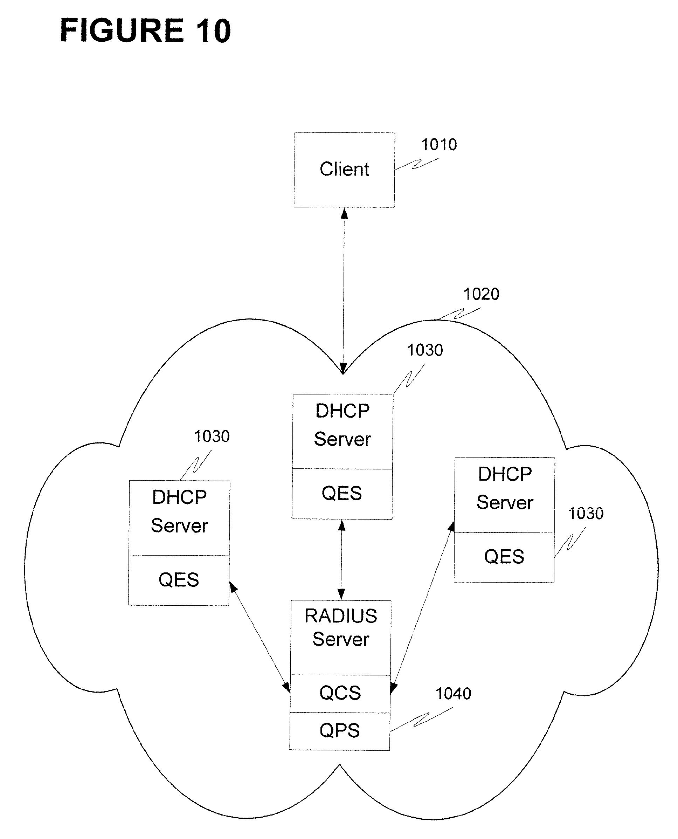

With reference to Figure 10, another embodiment of the invention is described. In this embodiment, a network includes a plurality of DHCP servers for provisioning a client with access to network resources. Each DHCP server 1030 includes a QES, which has been previously described. The network 1020 further includes a Remote Authentication Dial-in User Service (RADIUS) server 1040 that includes a QCS and a QPS, which have been previously described. Thus, in this embodiment quarantine coordination and policy management is centrally located on a single RADIUS server for the entire network 1020. When a client 1010 requests access to network resources from on of the DHCP servers 1030, the QES of the DHCP server relies on the QCS and QPS of the RADIUS server 1040 to authenticate the statement of health. If the RADIUS server 1040 validates the statement of health provided by the client, the DHCP server 1030 grants the client access to the network. If the statement of health is not validated, the DHCP server 1030 places the client in quarantine in accordance with a policy provided by the RADIUS server 1040.

DNS servers that provide network infrastructure support need to be accessible to quarantined and non-quarantined machines. A network administrator may choose to make an internet proxy server accessible to quarantined machines to allow those machines to access to the Internet.

The architecture of the invention supports multiple QPCs, including: (1) Antivirus QPCs that give SoHs on whether the AV is running, the version of AV, the signature version the AV is using, whether the AV is checking in real-time, etc. (2) QPCs that check for files or registry entries that exist or do not exist. This allows check for OS configuration such as ICF and ICS configuration, whether malware is installed, etc. (3) QPCs that check for the number of TCP/IP connections that each process sets up. The QPS can then quarantine clients which have applications that open many connections. This type of behavior is unlikely to be correct except for servers or peer-to-peer applications. It is also possible to support a QPS without a QPC. This allows network behavior checking to provide input into whether a client should be quarantined.

The programming model used to access the interfaces exposed by above-described software components is now described. The Quarantine Enforcement system has a public API on the client between the QPC and QCC and a public API on the server side between the QPS and QCS. Each API is a COM interface and is not remotely callable. Both APIs are not marked as safe for initialization or safe for scripting. The client APIs are synchronous and the server APIs are asynchronous. There are additional COM APIs used between the QEC and QCC and QES and QCS.

### Quarantine Coordination Client <- Quarantine Policy Client (IQuarPolicyClientBinding)

This interface is exposed by the QCC. It is used by QPCs. This interface is ACLed for LocalSystem and NetworkService. It is the main entry point for QPCs to communicate to the Quarantine Platform. It is accessed by QPCs via the Global Interface Table. It is responsible for inter-process communication to the QCC service. If the QCC service is not running then COM will be configured to start the service. The QPC polls QCCQPC->Bind until the QCC service is running in case the QCC service is disabled for upgrade.

**Initialize** (QPC_ID, Product GUID, QPCQCC CLSID, QPC_READ CLSID, QPCQCCIF). This API is called at runtime for QPC to supply its QPCQCC interface to the QCC. Product GUID must be the same for all versions of a product. If possible different versions of a product should also use the same QPC_ID/QPS_ID and add versioning to the SoH. If not the new version should use a different QPC_ID/QPS_ID but the same Product GUID. QPCQCC CLSID is the CLSID for the COM object and must support an interface implementing the QPCQCC Interface. The QPC must create the QPCQCCIF using CoCreateInstance (QPCQCC Class GUID, QPCQCC IF GUID, &object). QPC_READ CLSID is the CLSID of the QPC_READ interface. This interface supports querying of information from the QPC.

**Uninitialize** (QPC_ID). This API is called at runtime when QPC is exiting. The QPC should make sure that it has no outstanding calls on QCC before making this call and should not make any more calls to QCC once this call has been made. The QPC should not destroy the QPCQCC and QPC_READ IF until this call has been made. The QCC will return this call once all calls to QPCQCC and QPC_READ have returned. The QPC should fail any calls to QPCQCC and QPC_READ when it makes the call to Unbind.

**NotifySoHChange** (QPC_ID). This API informs the QCC that the SoH state held by the QPC has changed.

**QuerySystemQuarantineState** (QPC_ID, *Q/NQ/Probation, *ProbationTime). This API allows QPC to query current client Quarantine state.

### Quarantine Coordination Client <- Quarantine Enforcement Client (IQuarEnforcementClientBinding)

The interface exposed by the QCC for use by the QEC. This interface is ACLed for LocalSystem and NetworkService only. This interface is exposed by QCC and is used by QECs. It is accessed by QECs via the Global Interface Table. It is the main entry point that QECs use to communicate to the QCC.

**Initialize** (QEC_ID, QECQCC CLSID, QEC_READ CLSID, QECQCCIF). This API is called at runtime for QEC to supply its QECQCC interface to the QCC. QECQCC CLSID must expose an interface of type QECQCC. The QECQCCIF is an interface obtained from the QECQCC_Class_GUID

**Uninitialize** (QEC_ID). This API is called at runtime when QEC is exiting and the QECQCC interface should not longer be used.

**QuerySoHs** (QEC_ID, ConnectionState IF). This API is called by the QEC when the QEC needs the list of SoHs to supply to its QES. The SoHs buffer format will not be understood by the QEC and must be passed to the QES transparently. ConnectionState IF is allocated by the QEC and is passed to the QCC and then to the QPC if necessary. The QCC and QPC can set and query information about the transaction. Once this API has returned the QCC and QPC may not access the ConnectionState IF. The function will for each QPC bound to the QCC call QuerySoH and then append any additional SoHs available in the cache for the QName. Before returning this function must call TestSoHHash on ConnectionState IF. If the function returns S_OK then QuerySoHs returns S_FALSE to indicate that no SoHs have changed, otherwise this function updates the SoH Hash by calling SetSoHHash on ConnectionState IF. QEC should always call QuerySoHs whether the ConnectionState has quarantine enabled, etc. The QCC will return with a status of NO_QUARANTINE_INFORMATION if there is no quarantine work for the QEC to do.

**QuerySoHResponseQuarantineState** (QEC_ID, ConnectionState IF, *Q/NQ). This API is called by the QEC to obtain the quarantine/not-quarantine state from the QCS SoHResponse.

**NotifyConnectionStateUp** (QEC_ID, ConnectionState IF). This API is called by the QEC when a List of SoHResponses is returned by its QES and the QEC is in a state read y to use the Response. The List of SoHResponses has been set by the QEC and its buffer format must not be understood by the QEC and must be passed to the QCC transparently. SoHResponse may be empty is the QES/QEC could not transport the SoHResponse. ConnectionState IF is allocated by the QEC and is passed to the QCC and then to the QPC if necessary. The QCC and QPC can set and query information about the transaction.

**NotifyConnectionStateDown** (QEC_BD, ConnectionState IF). This API is called by the QEC to inform the QCC that a Connection has changed to the down state and the QCC may need to update the system Quarantine state.

**NotifySoHChangeFailure** (QEC_ID). This API is called by QEC if a QEC failed to act on a NotifySoHChange. The QCC should then start a timer and when the timer expired call QECQCC->NotifySoHChange.

### Quarantine Policy Client <- Quarantine Coordination Client (IQuarPolicyClientCallback)

The QPC exposes an interface for use by the QCC. This interface is ACLed to LocalSystem and NetworkService and not remotely accessible. This interface is exposed by a QPC and is used by the QCC. Any code including QCC that calls this must use a context where QPC cannot impersonate the caller. When a QPC calls Bind on the QCC it passes a Class GUID that the QCC uses to create a QPCQCC interface instance.

**QuerySoH** (QPC_ID, ConnectionStateRead IF). This API is called by QCC to query for the SoH. The QPC must call ConnectionState->SetSoH to set their SoH. If the QPC handles different SoHs per network then it should query the QName on the ConnectionState IF to return the correct SoH.

**ProcesssoHResponse** (QPC_ID, ConnectionStateRead IF, *QPS_Result). The QPC processes the SoH response interface from the QCC. If a QPC was not bound to the QCC when ProcessSoHResponse should have been called the SoHResponse is discarded. QName is the Quarantine Name of the network that returned the SoH response. The SoHResponse may be empty is the QES/QEC could not transport the SoHResponse. QPS_Result is a HRESULT returned from the QPS returned to the QPC in its SoHResponse. The QPS_Result will be logged with the QCC/QEC logging information.

**NotifySystemQuarantineStateChange** (QPC_ID, Q/NQ). Notify the QPC that the system Quarantine state has changed.

**QueryStatus** (QPC_ID, *State, *Percentage, *MessageID). Supplies the current State of the QPC and a Message describing the progress it is making in coming up to date in its policy configuration and hence it's SoH. State is one of In Progress, Completed successfully, and Failed to complete. Percentage is 0 to 100%, a return of -1 means the QPC does not support %. The Message must be a MessageID that can be used with QPC_READ IF.

### Quarantine Enforcement Client <- Quarantine Coordination Client (IQuarEnforcementClientCallbaek)

The QEC exposes an interface for use by the QCC. This interface is exposed by a QEC and is used by the QCC. This interface is ACLed to LocalSystem and NetworkService and not remotely accessible. When a QEC calls Bind on the QCC it passes a Class GUID that the QCC uses to create a QECQCC interface instance.

**NotifySoHChange** (QEC_ID). This API is informs the QEC that the SoH state held by the QCC has changed. A QEC should not ignore this call but if it is busy it may but is not recommended to ignore this call. The QCC will this API at intervals while the system is in Quarantine.

**QueryConnectionState** (QEC_ID, *Number_IFs, *ConnectionState []). This API is queries the QEC for its list of quarantine interface IDs. The format of ConnectionState is an array of ConnectionState IFs.

**ResetQuarantineState** (QEC_ID). This API is called by QCC when QCC enables or disables quarantine. A QEC should reset any quarantine configuration.

### SoHState IF

This interface is used by the ConnectionState and TransactionState interfaces. The ConnectionState and TransactionState use an instance of this interface to contain a List of SoHs and to contain a List of SoHResponses.

**QuerySoHStateRead:** This API is used by QCC and QCS to obtain the SoHStateRead Interface. **SetListOfSoHResponses** (SoHResponse): This API is used by QEC to set the List of SoHResponses. **QueryListOfSoHResponses** (*SoHResponse): This API is used by QES to query the List of SoHResponses. **SetSoHResponse** (QPS_ID, SoHResponse): This API is used by QCS to set SoHResponse. **SetListOfSoHs** (SoHs): This API is used by QES to set the List of SoHs. The transaction ID should be copied out of the QCC SoH. If there is no QCC SoH in the List of SoHs, a transaction ID should be created and assigned. This API should validate the List of SoH format before any use of the List of SoHs. **QueryListOfsoHs** (SoHs): This API is used by QES to query for theirs or another SoH. **SetsoH** (QPS_ID, SoH): This API is used by QCC to set SoH. **SetQCSQPS_IDs:** This API is used to set the preferred QPS_IDs in the QCS SoHResponse. **QueryQCSQPS_IDs:** This API is used to read the preferred QPS_IDs from the QCS SoHResponse. **SetQCCClientName:** This API is used to read the Client Name from the QCC SoH. **QueryQCCClientName:** This API is used to read the Client Name from the QCC SoH. **SetQCSClientState:** This API is used to set the client state that the QCS has decided. **QueryQCSClientState:**This API is used to read the client state from the QCS SoHResponse. **SetQCCClientState:** This API is used to set the current client state in the QCC SoH. **QueryQCCClientState:** This API is used to read the client state from the QCC SoH. **SetQCCTransactionID:** This API is used to set the current client state in the QCC SoH. **QueryQCCTransactionID:** This API is used to read the client state from the QCC SoH.

**SetQCSTransactionID:** This API is used to set the current client state in the QCC SoH. **QueryQCSTransactionID:** This API is used to read the client state from the QCC SoH. **SetQCCOSVersion:** This API is used to set the current client state in the QCC SoH. **QueryQCCOSVersion:** This API is used to read the client state from the QCC SoH. **SetQCCOSSPVersion:** This API is used to set the current client state in the QCC SoH. **QueryQCCOSSPVersion:** This API is used to read the client state from the QCC SoH. **SetQCCProcessorArchitecture:** This API is used to set the current client state in the QCC SoH. **QueryQCCProcessorArchitecture:** This API is used to read the client state from the QCC SoH. **SetQCSQPS_Results:** This API is used to set the current client state in the QCC SoH. **QueryQCSQPS_Results:** This API is used to read the client state from the QCC SoH. **SetQCSQName:This** API is used to set the current client state in the QCC SoH. **QueryQCSQName:** This API is used to read the client state from the QCC SoH. **SetQCSQCSName:** This API is used to set the current client state in the QCC SoH. **QueryQCSQCSName:** This API is used to read the client state from the QCC SoH. **SetQCSProbationTime:** This API is used to set the current client state in the QCC SoH. **QueryQCSProbationTime:** This API is used to read the client state from the QCC SoH. **SetQCSURL:** This API is used to set the current client state in the QCC SoH. **QueryQCSURL:** This API is used to read the client state from the QCC SoH.

### SoHStateRead IF

This interface is used by the ConnectionState and TransactionState interfaces. This interface is passed to QPC and QPS to query for SoHs and SoHResponses.

**QuerySoHResponse** (QPS_ID, SoH): This API is used by QCC and QPC to query for theirs or another SoHResponse. **QuerySoH** (QPS_ID, SoH): This API is used by QCS and QPS to query for theirs or another SoH.

### Connection State for QEC/QCC (IQuarClientConnection)

This interface is used by QEC to manage state per unique network "interface" that has a Quarantine state. This interface is ACLed to LocalSystem and NetworkService and not remotely accessible. This interface is exposed to QEC and QCC. The ConnectionStateRead interface is exposed to QCC, QEC and QPC. A network "interface" may map to a physical NIC or may map to a logical connection to another machine e.g. IPsec.

**QueryConnectionStateRead:** This API allows the QCC to query for the ConnectionStateRead interface. **QuerysoHstate:** This API allows the QEC and QCC to query for the SoHState interface. **SetMaxSize:** Allows the QEC is set its maximum supported List of SoHs size. **SetQName:** The QCC receives the QName from the QCS and sets the QName on the ConnectionState IF. **SetQCSName:** This API is allows QCC to set the current QCS used on this ConnectionState. **SetPreferredQPS_IDs:** Used by QCC to set the preferred QPS_IDs for a QCS. **SetURL:** Used by QCC to set the URL for a QCS. **SetSoHHash:** A Hash of the SoHs is stored in the ConnectionState **IF** object. **SetTransactionID** (ConnectionState ID, Length): The **API** is used by QEC to set the transaction ID. The QEC should pass in an ID for the ConnectionState, e.g. for DHCP this should be the NIC MAC address. SetTransactionID should hash this with a random number and generate an eight byte hash. **SetQuarantineState** (Quarantine_Enable, Quarantine/Probation/Non-quarantine): Sets the Quarantine/Not Quarantine state dependent on the result in the QCS->QCC SoH returned from the QCS. **SetProbationTime** (ProbationTime): Sets the Probation Time on this ConnectionState IF. It should only be called if a QCSIQCC SoH contained a Probation Time and a quarantine state of probation. ProbationTime is in seconds. This API saves the probation expiry time for TestProbationTime. A ProbationTime of 0 means the ProbationTime is not set. **SetQECInfo** (EnumType, QECInfo): EnumType contains information from the QEC about the QEC. The QECInfo is dependent on the QEC EnumType but contains the following: DHCP QEC (Client IP address, Client MAC address), PEAP QEC, and IPsec QEC. **Serialize** (output buffer, *size): This API is writes the ConnectionState IF configuration into the output buffer. The output buffer should not be put anywhere that a non-admin can access, either for read or write. **Deserialize** (*input buffer, size): This API is reads the input buffer into the ConnectionState IF configuration. This API can be used with Serialize by DHCP QEC to save and restore the ConnectionState information into the registry. The registry data should only be accessible to an administrator.

### Connection Statefor QPC (IQuarPolicyClientConnection)

This interface is used by QEC to manage state per unique network "interface" that has a Quarantine state. This interface is ACLed to LocalSystem and NetworkService and not remotely accessible. This interface is exposed to QEC, QCC and QPC. A network "interface" may map to a physical NIC or may map to a logical connection to another machine e.g. IPsec. The table lists the methods and which component uses each method.

**QuerySoHStateRead:** This API allows the QPC to query for the SoHStateRead interface. **QueryMaxSize:** MaxSize allows the QEC to specify the maximum size of SoH buffer that the QCC may return. **QueryQName:** QName specifies the Quarantine Name that the SoHs are being queried for. If the QEC does not know the QName it shall use "". The QCC shall return SoHs that were published with a "" QName or the last SoHs that were used. **QueryQCSName:** Query the current QCS on this ConnectionState, if known. **QueryPreferredQPS_IDs:** Used by QCC to query the preferred QPS_IDs for a QCS. **QueryURL:** Used by QCC to query the URL for a QCS. **TestSoHHash:** A Hash of the SoHs just set by SetSoH is generated and compared with the previously stored hash and the function returns S_OK if the Hashes match otherwise S_FALSE is returned. **QueryTransactionID** (*ID): This API is returns the transaction ID set by SetTransactionID, used by QCC, QEC and QPC. When they log they should add this ID to the log. **QueryQECInfo** (EnumType, QECInfo): EnumType contains information from the QEC about the QEC. The QECInfo is dependent on the QEC EnumType but contains the following: DHCP QEC (Client IP address, Client MAC address), PEAP QEC, and IPsec QEC. **QueryQuarantineState** (*Quarantine_Enable, *Quarantine/Probation/Non-Quarantine): Returns quarantine state of quarantine/probation and non-quarantine. **TestProbationTime** (*Passed): It returns whether the ProbationTime has passed since SetProbationTime was called. It the ProbationTime was not set then Passed will return False. **QueryProbationTime** (*ProbationTime): Queries the Probation Time on this ConnectionState IF. If the ProbationTime was not set then it returns 0. **SetQPCInfo** (Info, Length of Info, Size): The QPC may save some information on the ConnectionState IF object, e.g. it can save the Policy Server name/address that should be used with this Quarantine Interface. MaxSize of the info is 256 bytes. No Handles or pointers should be stored. **Quet-yQPCInfo** (*Info, *Length of Info): This API is allows the QPC to query for the information previously saved against the ConnectionState IF. It is expected that the return buffer is at least 256 bytes in size, i.e. the maximum size that can be set via SetQPCInfo.

### Quarantine Coordination Client Management IF

The QCC exposes two management interfaces. One for read and one for write. The COM object is a singleton and exposed in the Com global running table. It is exposed in the global table in a way that it is access to netshell.dll in all WINSTA instances. The interfaces are:

**IQuarClientInfo:** This interface is ACLed to everyone and not remotely accessible. Any code including QCC and QCC UI that calls this must use a context where QPC cannot impersonate the caller. **EnumQPC** (*QPC_IDs, *QPC_READ CLSID []): Enumerate the list of QPCs registered with the QCC and their QPC_READ IF. **EnumQEC** (*QEC_IDs, *QEC_READ CLSID []): Enumerate the list of QECs registered with the QCC and their QEC_READ IF. **QuerySystemQuarantineState** (*Quarantine_Enable, *Quarantine/Probation/Non-quarantine): Query the Quarantine state of the system. **QueryQPCState** (QPC_ID, *bind/unbind, *datetime, *SoH): Query the QCC state for the QPC_ID. The bind/unbind state is returned. The API returns the last time/date that the SoH was updated and the current SoH is returned. **QueryQECQuarantineState** (QEC_ID, *bind/unbind, *ConnectionState IF []): Query the QCC state for the QEC_ID. The bind/unbind state is returned. The list of ConnectionState IFs for the QEC is returned, if will empty if the QEC_ID is not bound. **QueryStatus** (QPC_ID, LANGID, *State, *Percentage, *MessageID): Supplies the current State of the QPC and a Message describing the progress it is making in correcting its SoH. State is one of (1) Quarantined but updates failed. The user may have to get help from an administrator or support web site; (2)Quarantined and updates in progress; and (3) Quarantined and all updates succeeded. Percentage is 0 to 100%, a return of-1 means the QPC does not support %. The Message must be a MessageID usable with QPC_READ IF. The Message should also local text about what the QPC is doing plus text about the QPS_Result.

**IQuarClientConfig:** This interface is ACLed to LocalSystem and NetworkService and not remotely accessible. This interface has no APIs.

### Quarantine Policy Client Management IF

**IQuarPolicyClientInfo:** This interface is ACLed to everyone and not remotely accessible. Any code including QCC and QCC UI that calls this must use a context where QPC cannot impersonate the caller. **QueryFriendlyName** (QPC_ID, *MessageID): This API is returns a MessageID for the friendly name of the QPC. **QueryQPSResult** (QPC_ID, QPS_Result, *MessageID): This API is returns a MessageID for the QPS_RESULT. **Querymessage** (QPC_ID, LANGID, MessageID, *Message): This API is returns a Unicode string for the MessageID and the specified LANGID. If a string for the LANGID does not exist the string for the default system LANGID must be returned.

**IQuarPolicyClientConfig:** This interface has no APIs.

### Quarantine Enforcement Client Management IF

**IQuarEnforcementClientInfo**: This interface is ACLed to everyone and not remotely accessible. **QueryFriendlyName** (QEC_ID, *MessageID): This API is returns a MessageID for the friendly name of the QEC. **Querymessage** (QEC_ID, LANGID, MessageID, *Message): This API is returns a Unicode string for the MessageID and the specified LANGID. If a string for the LANGID does not exist the string for the default system LANGID must be returned.

**IQuarEnforcementClientConfig:** This interface has no APIs.

During initialization of a QEC, the QEC calls QCCQEC->Bind on the QCC passing its class GUID for its own QECQCC interface. The QCC on receiving the Bind call creates and Queries for the QECQCC interface for the QEC. During initialization of a QPC, the QPC calls QCCQPC->Bind on the QCC passing its class GUID for its own QPCQCC interface. The QCC on receiving the Bind call creates and Queries for the QPCQCC interface for the QPC. The QCC, in addition, notifies the QECs of a possible SoH change using QECQCC->NotifySoHChange.

When a QPC changes its own SoH, it notifies the QCC by calling NotifySoHChange on the QCCQPC interface. The QCC calls each QEC that is registered with it and calls NotifySoHChange on each QECQCC interface. Each QEC looks at its Quarantine "interfaces" for any "Interfaces" that are quarantine enabled. For each of these interfaces, the QEC calls QuerySoHs on the QCC passing the ConnectionState IF for each Quarantine "interface". The QCC will call QuerySoH for each QPC that has called Bind with ConnectionState IF as a parameter. The QCC will then append any SoHs for the correct ConnectionState IF that is held in the QCC cache and return a list of SoHs to the QEC for use on the ConnectionState IF. The QCC must also call QuerySoHHash after generating the list of SoHs before returning from QuerySoHs to check whether the list of SoHs is unchanged from the last time. If QuerySoHHash returns S_OK that the list of SoHs is unchanged and QuerySoHs should return S_FALSE. If QuerySaHHash returns S_FALSE then the list of SoHs is different. QCC must then call SetSoHHash to update the saved hash to the new list of SoHs. The QCC must also call QueryMaxSize when generating the list of SoHs and the buffer containing the list of SoHs must not be larger then Maxsize. The list of SoHs should be truncated to be the maximum number of complete SoHs that fit within MaxSize.

The List of SoHs will then be sent by the QEC to its QES counterpart who will process them by sending them to its QCS. The QCS will pass a list of SoHResponse to the QES to return to the QEC. The QEC on receiving the list of SoHResponse will call ProcessSoHResponses on the QCCQEC interface. The QCC will split up the list of SoHResponse and call ProcessSoHResponse for each QPC that has called Bind and a SoHResponse is in the List of SoHResponse. Any SoHResponse for QPCs that have not called Bind will be discarded. When QCC is handling the ProcessSoHResponses function, it uses a number of APIs on the ConnectionState IF that is passed to ProcessSoHResponses. The ConnectionState IF is created and managed by a QEC and when ProcessSoHResponses completes, neither QCC nor QPC is allows to use the ConnectionState IF. The QCC may call SetQName to set the Quarantine Name on the ConnectionState IF. QName is supplied by the QCS in the QCS->QCC SoH.

The QEC Network Request API Interaction is now described. When a QEC needs to make a network request, it needs to obtain the SoHs to send. It calls QuerySoHs on the QCC to do this. The interface is the same as for a NotifySoHChange except that the interaction is initiated by the QEC rather than by the QPC calling NotifySoHChange.

### Quarantine Policy Server <- Quarantine Coordination Server (IQuarPolicyServerBinding)

This API is ACLed to LocalSystem and NetworkService. The QPS exposes an interface to be used by the QCS. The QCS calls CoCreateInstance to obtain this interface: **Initialize** (QPS_ID); **Uninitialize** (QPS_ID); **ValidateSoH** (QPS_ID, TransactionStateRead IF): This API is called by the QCS to request that a QPS validates its SoH. The QPS must call TransactionStateRead->QuerySoH to obtain its SoH. If the SoH buffer is empty then the SoHResponse buffer in TransactionstateRead->OnvalidatesoHcomplete must be empty. The QPS must return this call immediately and call TransactionstateRead->OnvalidatesoHcomplete when validation is complete.

### Quarantine Coordination Server <- Quarantine Enforcement Server (IQuarEnforcementSet-verBinding)

This interface is ACLed to LocalSystem and NetworkService. It is accessed by QESs via the Global Interface Table. **ValidateSoHs** (QES_ID, TransactionState IF, ResponseTime): This API is called by the QES to request that the QCS validates a list of SoHs. The QCS must call TransactionStateRead->QuerySoH to obtain its SoH. The SoHs buffer format will not be understood by the QES and must be passed to the QCS transparently. This call must return immediately and the QCS will call TransactionState->OnValidateSaHCamplete with the quarantine state result. ResponseTime is the time that the QCS must call OnValidateSoHsComplete for the result to be useful to the QES.

### Transaction State for QCS/QES (IQuarServerTransaction)

This interface is ACLed to LocalSystem and NetworkService. This interface is exposed to QES and QCS. The TransactionStateRead (See Section Error! Reference source not found.) interface is exposed to QCS, QES and QPS. **QueryQCSStateRead** (*QCSStateRead IF): This API returns the interface to QCSStateRead. **QuerySoHState:** This API allows the QES and QCS to query for the SoHState interface. **SetQESInterfaces** (QES_ID, QESTransactionState IF, QES_READ IF): This API sets the QESTransactionState and QES_READ interfaces used by this TransactionState instance. The QES must correctly de-reference these interfaces after use. **SetQCSInterface** (QCSTransactionState IF): This API sets the QCSTransactionState interface used by this TransactionState instance. The QES must correctly de-reference these interfaces after use. **OnValidateSonsComplete:** QCS will call this interface when it completes processing ValidateSoHs. This function calls QESTransactionState->OnValidateSoHsComplete. **SetQuarantineConfig:** This API is used by QES to specify the QCS configuration to be used for this ValidateSoHs. This API allows the QES to specify to the QCS that the client making this request is exempt from having its connectivity affected by the quarantine decision. The QCS should add this information to the logging information. MessageID is an ID for the reason for the exemption, e.g.: Reservation, Scope, Domain name match, BOOTP. The MessageID is logged when the exemption is logged. **SetMaxSize** (MaxSize): Used by QES to specify maximum size of SoHResponse that the QCS returns. **SetClientName** (Client machine/domain name): Used by QCS to set the client machine/domain name from the QCC SoH, used for logging. **SetClientState** (Quarantine/Probation/Non-quarantine): Used by QES or the QCS to set the client quarantine state from the QCC SoH. The QCS should only set this if the QES could not. **SetConnectionState** (Up/Down): Used by QES to set the current connection state. **Clear**: Can be used to reset object state, if it is being reused.

### Transaction State for QPS (IQuarPolicyServerTransaction)

This interface is ACLed to LocalSystem and NetworkService. This interface is exposed to QES, QCS and QPS. **OnValidateSoHComplete** (SoHResponse): QPS will call this interface when it completes processing ValidateSoH. This function calls QCSTransactionState->OnValidateSoHsComplete. This function calls TransactionState->SetSoHResponse with the passed in SoHResponse. The API must validate the SoHResponse before calling SetSoHResponse. **QuerySoRStateRead (SoHStateRead):** This API is used to obtain the SoHStateRead interface. **QueryClientState** (* Quarantine/Probation/non-quarantine): Can be used by QPS to get the client quarantine state. **QueryQES** (*QES_ID, *QES_READ CLSID): This API returns the QES_ID and QES_READ IF for the QES that called SetQESInterfaces. **QueryConnection State** (Up/Down): Used by QCS to query the current connection state. **QueryQuarantineconfig:** This API is used by the QCS to obtain the QCS configuration to be used for this ConnectionState IF. The configuration parameters include: Quarantine State On/Off/Probation: The decision the QCS should make if the QPSs say the client should be quarantined and an exemption is not used. Probation period: Probation period to use if probation is the client state chosen. Quarantine Logging enabled: The quarantine decision should be logged but the user connectivity not affected. Connectivity Exempt Non-Quarantine aware clients: Exempt any clients that do not set a SoH. Failure URL: The URL to be returned to the client on a failure. Regular expression exemption: Used for machine/domain name exceptions. Exempt reason: The reason this transaction is to be exempt from QES. **QueryTransactionID** (*ID): This API is used by QCS, QES and QPS. When they log they should add this ID to the log. **QueryMaxSize** (*MaxSize): This API allows the QCS to obtain the maximum size of the List of SoHResponses that the QES can accept. **QueryClientName** (*Client machine/domain name): Can be used by QPS to get the client machine/domain name, e.g. for logging.

### Quarantine Coordination Server <- TransactionState (IQuarPolicyServerCallback)

The QCS exposes an interface to be used by the TransactionState. This interface is ACLed to LocalSystem and NetworkService. It is given to a TransactionState instance by QCS using the TransactionState->SetQCSInterface API. **OnValidateSoHComplete** (TransactionState IF, Q/NQ, QPS_Result): This API is called by the TransactionState on OnValidateSoHComplete. QPS_ResuIt is a HRESULT that describes why the QPS returned the Q/NQ result. If a QPS returns a HRESULT of INVALID_SOH QCS should call. TransactionState->OnValidateSoHsComplete with an HRESULT of INVALID_SOH.

### Quarantine Enforcement Server <- TransactionState (IQuarEnforcementServerCallback)

**OnValidateSoHsComplete** (TransactionState IF, Q/NQ): The SoHResponse buffer format will not be understood by the QES and must be passed to the QEC transparently. If QPS failed OnValidateSoHComplete with HRESULT INVALID_SOH or QCS failed the validation of the List of SoHs it should pass an HRESULT of INVALID_SOH.

### Quarantine Coordination ServerManagement IF (QCS)

The QCS exposes two management interfaces, one for read and one for write. The write interface is accessible to administrators only. The read interface is accessible by all users. The COM object is a singleton and exposed in the Com global running table. It is exposed in the global table in a way that it is access to netshell.dll in all WINSTA instances. The interfaces are: **IQuarServerInfo:** This interface is ACLed to everyone. **EnumQPS** (*QPS_IDs, *QPS_READ CLSID []): Enumerate the list of QPSs registered with the QCS. **IQuarServerConfig:** This interface is ACLed to LocalSystem and NetworkService and not remotely accessible. This interface has no APIs

### Quarantine Policy Server Management IF, (QPS)

This interface is ACLed to LocalSystem and NetworkService and not remotely accessible. **IQuarPolicyServerInfo: QueryFriendlyName** (QPS_ID, *MessageID): This API is returns a MessageID for the friendly name of the QPS. **QueryQPSResult** (QPS_ID, QPS_Result, *MessageID): This API is returns a MessageID for the QPS_RESULT. **Querymessage** (QPS_ID, LANGID, MessageID, *Message): This API is returns a Unicode string for the MessageID and the specified LANGID. If a string for the LANGID does not exist the string for the default system LANGID must be returned. **IQuarPolicyServerConfig:** This interface has no APIs.

### Quarantine Enforcement Server Management IF (QES)

This interface is ACLed to LocalSystem and NetworkService and not remotely accessible. **IQuarEnforcementServerInfo: QueryFriendlyName** (QES_ID, *MessageID): This API is returns a MessageID for the friendly name of the QES. **Querymessage** (QES_ID, LANGID, MessageID, *Message): This API is returns a Unicode string for the MessageID and the specified LANGID. If a string for the LANGID does not exist the string for the default system LANGID must be returned. **QueryInfo** (EnumType, QESInfo): EnumType contains information from the QES about the client. The QESInfo is dependent on the QES but contains the following: DHCP QES (Proposed Client IP address, Lease time, Client MAC address), PEAP QES (RADIUS Attributes). **IQuarEnforcementServerConfig: SetInfo** (EnumType, QESInfo): This API is used by QES to set the QES info.

The components of the invention will now be described in greater detail in view of the above-described APIs.

The Statement of Health is a collection of information from each QPC. The information from each QPC describes the state of the client checked by each client. The SoH is passed to the QCS component which parses the SoH and passes each piece of information to the correct QPS to validate. The QCC is responsible for caching the information from each QPC. Each QPC publishes its information to the QCC whenever their policy information changes. The QCC produces a single packet contain one or more SoHs (There is always the QCC SoH). The QCC supplies this single packet to the QEC. The QEC/QES is responsible for fragmentation/defragmentation if it is needed for the QEC/QES protocol. The QCS produces a single packet contain one or more SoH Responses (There is always the QCS SoH Response). The QCS supplies this single packet to the QES. The QES/QEC is responsible for fragmentation/defragmentation if it is needed for the QES/QEC protocol. The QPC and QPS include versioning in the SoH by adding new information to the end of the SoH. If it is not possible to version the SoH, a QPC and QPS can allocate a new QPC_ID/QPS_ID but the Bind call (described later) must use the same Product GUID.

The QPC does a set of checks and publishes its SoH to the QCC. The SoH contains information that the QPS can use to check that the client is in the correct state. The QPS can return a SoH Response buffer to the client. This is used to inform the QPC of what to do if a failure occurs, e.g. poll server to get updated checks. It can also be used to supply information to the client such as the name of the server it should be using to get its information from. The QPC is run as a service running in the context of LocalSystem or NetworkService. The COM interfaces it exposes for QCC must be ACLed only for the local machine accounts LocalSystem and NetworkService. To enable the QCC to display a user interface (UI) to the user showing information about why the machine is in quarantine and the progress in getting the machine out of quarantine, the QPC supplies a status API (described later) to enable the QCC to query each QPC its state and the QPCs progress in updating the client to match with its policy server. A machine in Safe mode with networking should not have QCC running. The QEC if running bypasses quarantine calls. The QPC if running bypasses quarantine calls.

The QCC is the multiplexer/controller for the client. The QCC collects the SoH information from each QPC and cache the SoHs. A cache is updated when a new SoH is supplied by a QPC. An entry in the cache is deleted when the QPC COM object is uninstalled from the machine. This is detected since the QPC COM GUID is passed in the QCCQPC->Bind call (described later). The QCC provides a notification mechanism to the QPC when Quarantine state changes, as well as a communication channel between QPSs and QPCs. The QCC maintains a system quarantine state and collect status information from each QPC and provides both to the QCC UI. The QCC supplies the List of SoHs to the QECs, and passes SoH Response to the QPC.

The QCC supports an API for QPC to provide the above services to QPC. The API is ACLed only for the local machine accounts LocalSystem and NetworkService. Another API is available to the QCC UI to query for quarantine status and other status information to display to the user. The QCC UI runs within the user context and so the QCC API for the QCC UI must be ACLed for everyone. The QCC is implemented as a service; all QECs are dependent on this service. The QCC runs as NetworkService. QPCs attempt to call Bind during initialization, and if this call fails because QCC is not running they periodically attempt to call Bind. The QPC calls NotifySoHChange whenever its SoH changes. The QCC will call NotifySoHChange on each QEC. The QCC calls NotifySoHChange on each QEC at periodic intervals as long as the system is in Quarantine. The QCC and QCS use the SoH/SoHResponse format to exchange their own information, e.g. for the QCS to inform the QCC whether it has been quarantined or not. The QCC packs the SoHs into a buffer to pass to the QEC. The QCC and QCS will always put its own SoH in the buffer first. The QCC and QCS will include SoHs from all QPCs and QPSs. If the QCC has a list of required QPS_IDs from the QCS it must insert the SoHs in the order specified in the QCS SoH after inserting the QCC SoH.

If the QEC MaxSize is too small, the QCC should insert complete SoHs until MaxSize is reached. The QEC will pass as much information to the QES/QCS/QPS as possible. If a missing SoH affects the quarantine policies then the machine will be quarantined but the QCS SoHResponse returns the list of QPS_IDs for the QPSs that are running on the QES/QCS/QPS server so the QCC can provide the minimum information in a retry. If the QCS returns a Quarantine Time of probation with a Probation Time, the QCC saves the Probation Time on the ConnectionState IF. The QCC then starts a timer of the Probation Time. When the Probation Time expires the QCC triggers a NotifySoHChange to all the QECs. When the QECs call QuerySoHs the QCC checks the ConnectionState IF Probation Time and if the Probation Time is expired then return the list of SoHs whether the SoHs have changed or not. If the System State is Probation, the Probation time is the time until the first ConnectionState Probation time expiries. If a QEC calls QCCQEC->NotifySoHChangeFailure the QCC must run a timer and call QECQCC->NotifySoHChange when the timer expires. If a QPC calls QuerySystemQuarantineState, the QCC must have combined the individual ConnectionState quarantine states to produce a single system state. The individual states are combined using the following rules in the following order: Any ConnectionState in Quarantine State -> System state is Quarantine; No ConnectionState in Quarantine State and any ConnectionState in Probation state -> System State is Probation; All ConnectionState in Non-Quarantine state -> System State is non-quarantine. Since QCC is a service, it will run in svchost and unloads all its dlls when it is stopped. The QCC monitors calls to the QEC, if the API does not return within a short time (X ms), the QCC event logs this and removes the QPC from the list of QPCs used and ignore any calls from that QPC. The QCC monitors calls to the QPC, and if the API does not return within a short time (X ms), the QCC event logs this and removes the QEC from the list of QECs used. The service restartable. QECs and QPCs should be able to recover from the QCC being restarted.

If the QCC or any of the QECs is killed or crashes, the system must automatically enters quarantine when the SoH is invalid. The QCCQPC and QCCQEC COM objects are configured to auto-start the QCC service. The QCC is configured to start on machine boot. The QCC caches SoHs from QPCs (it does not cache the QCC SoH). The cache is persistent across service and system restarts. The QCC has a registry parameter that configures whether the quarantine client is enabled or not. The QCC automatically enables and disables quarantine support when the registry parameter is set. When quarantine is disabled, QuerySoHs returns no SoHs (including no QCC SoH). QCCQPC->NotifySoHChange returns with no action. QCCQEC->ProcessSoHResponses processes the QCS SoHResponse but no other SoHResponses. QCC_READ->QueryQuarantineState returns the quarantine state in the QCS SoHResponse. A QCS sends information to the QCC in the QCS SoHResponse. The QCS cache sthis information. The index for the information is the QCS GUID in the QCS SoHResponse.

The user needs to be aware whether the machine is Quarantined or not. This information is shown at two levels: system wide - whether the machine is in quarantine and which QPC is failing; and per connection - for DHCP, 802.1X and VPN this is per connection, for IPsec this is per connection to a peer machine. For system wide information an icon is displayed in the system tray when system in quarantine. A balloon with information text is displayed and the user clicks on balloon to get a status dialog. The Quarantine status dialog calls QCC_READ->QueryStatus with a QPC_ID of QCC_ID (0, 0, 311 and 0). The QCC uses this to return status information about QPCs that have not called Bind. In particular, if the system is quarantined and an SoH Response is supplied to QCC that it could not deliver to a QPC, the QCC_READ->Querystatus for QCC_ID notes that a quarantine client is missing. The Status dialog displays some overall text and a message per QPC showing the status of each QPC. A button to display a web page from the URL in the QCS SoH is also displayed, as well as a button to display the Network Connections folder. The web page is displayed in a restricted IE browser, only basic HTML is enabled and no Active X, no Java or other scripting, no links, no DHTML are allowed. The display of Quarantine status information (e.g. machine in quarantine) occurs on all interactive windows stations that are running explorer. This enables the display of quarantine status information on all users running Fast User switching and all users logged onto a Terminal Server. The command line utility netsh displays the system wide quarantine information. The quarantine system can also be enabled and disabled via netsh. The QCC is able to trace to a file, enabling/disabling the trace is via netsh. The QCC logs the following to the trace file whenever the quarantine state changes: Quarantine/ProbationlNon-Quarantine state, QPCs Bound, Transaction ID, QES GUID, QNAME GUID, QECInformation: NIC MAC address, IP address, QPC that failed along with diagnostic information from the QPC, SoH Response QPS_ID that did not get handled, and Contents of SoH and SoH Responses.

The QEC components provide the Quarantine Enforcement. There are a number of possible QECs: DHCP, VPN, PEAP and IPsec. A QEC uses either the BoH or the SoH to prove the client's state. The DHCP QEC communicates the SoH to the DHCP server. The IPsec QEC uses only BoHs. A QEC calls QCCQEC->NotifyInterfaceStateChange when an interface arrives or goes, e.g. PnP events. If the interface generates Mediasense connect/disconnect, the QEC generates QCCQEC->NotifyInterfaceStateChange. If the connectivity on the interface changes e.g. IP address, 802.1N keys, etc., the QEC generates QCCQEC->NotifyInterfaceStateChange. The QEC and QES do not understand the format of the List of SoH and List of SoH Response buffers. When the QCC calls QECQCC->NotifySoHChange, the QEC returns the call immediately. If the QEC finds that it cannot process the NotifySoHChange for any reason, it can either save the notification to process later or it can call QCCQEC->NotifySoHChangeFailure and ignore the NotifySoHChange. In this case, the QCC will start a timer. When the timer expires, the QCC will call QECQCC->NotifySoHChange on all QECs.

The DHCP QEC obtains a buffer containing a list of SoHs from the QCC. DHCP Client fragments the buffer, if required and puts each fragment into a DHCP option to be sent in a DHCP Discover, DHCP Request and DHCP Inform. SoHs are not added to DHCP Decline and DHCP release. The DHCP option used is a Microsoft® Vendor option. DHCP QEC and QES do not understand the format of the list of SoHs, the format of an individual SoH, nor the buffer containing SoHResponse.

The PEAP QEC can use SoH or BoH. If SoHs/SoHResponses are used they must be exchanged within the PEAP tunnel to provide authentication of the server and protection of the SoH/SoHResponse exchange. When PEAP QEC is used with VPN and client is not configured to use policy server e.g. WUS, then QPS will fail client. If the QPC needs configuration information about its policy server, the QPS should supply this to the QPC in its SoHResponse, e.g. the WUS QPS should put the WUS server name in the SoHResponse.

The IPsec QEC uses the BoH. This means an IPsec enforcement Quarantine system requires the deployment of a Quarantine Server. The Quarantine Server validates the SoHs and issues a BoH if the SoHs are validate.

In one embodiment of the invention, the quarantine server is a DHCP server. The DHCP server machine contains a DHCP QES, the QCS and the QPSs. The DHCP QES processes the Quarantine DHCP option, collects the SoH information and generates a List of SoHs and passes the list to the QCS using QCSQES->ValidateSoHs. The QCS splits each SoH and passes each SoH to the correct QPS using QPCQCS->ValidateSoH. The QCS collects the results from each QPS by the QPS calling QCSQPS->OnValidateSoHComplete and informs the DHCP QES of the result by calling TransactionState->OnValidateSoHsComplete. The DHCP QES obtains the non-quarantine DHCP options, if the client is to be put in quarantine it then obtains the quarantine options and uses the quarantine options instead of an equivalent non-quarantine option, deletes any options specified as not to be sent to a quarantine client.

The QPSs validate their SoH, accessing their Policy Server if necessary. Each QPS returns a quarantine or non-quarantine to the QCS. The QPS can also return some information (SoH Response) that the QCS will send to the QCC who will pass it to the QPC. The QEC/QCC send SoHs in the DHCP Discover and DHCP Request and the QCSIQES process these and send SoH Responses in the DHCP Offer and DHCP Ack. This allows Quarantining to work for BOOTP and DHCP clients. The DHCP Server finds the scope and the Quarantine attributes and calsl TransactionState->SetQuarantineConfig and TransactionState->SetConnectivityExempt before calling ValidateSoHs so Connectivity Exempt flags, etc. are known. The DHCP server calls ValidateSoHs for the following incoming DHCP packets: DHCP Discover, DHCP Request and DHCP Inform. This allows QCS to override all DHCP Quarantine processing. The DHCP server does not call ValidateSoHs for DHCP Decline and DHCP Release. The DHCP server does not call QCS for DHCP Discover and DHCP Request unless it has a valid IP address for the client. It does not call QCS for DHCP Inform unless the client has a valid lease. This is done so that QCS is not processing or caching information for clients that DHCP cannot give an IP address to.

If the DHCP server quarantine is used with RQC/RQS Quarantining, then the following configuration for DHCP server should apply: If the VPN server is using the DHCP server to obtain IP addresses for the VPN clients. Then a separate DHCP scope should be used and the scope should have DHCP quarantining disabled. If the VPN server is not using the DHCP server to obtain IP addresses for the VPN clients but a DHCP scope is configured into the DHCP server to return DHCP options for the DHCP inform message, then a separate DHCP scope should be used and the scope should have DHCP quarantining disabled. TheDHCP server fragments the List of SoH Responses, if required and puts each fragment into a DHCP option to be sent in a DHCP Offer and DHCP ACK. SoH Responses are not added to DHCP NAK. The DHCP server tracks the following as performance counters and also displays them in the DHCP MMC: Number active leases in quarantine; Number active leases in Not-quarantine; Number active leases in probation; Number of dropped quarantine requests. If QCSQES->ValidateSoHs is failed by QCS, the DHCP server should drop the request if quarantine configuration is enabled or probation. If this should happen QES should generate an event log every 5 minutes with the number of dropped requests in the last 5 minutes. If the OnValidateSoHsComplete is completed with a failure the DHCP server should quarantine the client. This should not occur since the QCS must put the QCS SoHResponse in the List of SoHResponses first. The maximum size of the QCS SoHResponse is defined to be smaller than the DHCP MaxSize for the List of SoHResponses. TheDHCP server has a registry configuration parameter to specify the timeout that QCS uses for each ValidateSoHs. Response Timeout: Milliseconds that QCS waits for QPS to call OnValidateSoHComplete from the QCS calling ValidateSoH. This is passed to QCS in the QCSQES->ValidateSoHs.

The QCS is used to validate a list of SoHs. A list of SoHs is supplied to the QCS from a QES (including a Quarantine Server QES). The QCS splits up the list of SoHs and passes each SoH to the correct QPS. If a QPS is not available for a SoH the SoH is dropped and ignored. The QCS collects the results from each QPS and generates a single result. This result is used to decide whether to Quarantine or not. The QCS has an overall Quarantine/Not Quarantine configuration to allow the system to be deployed and tested without Quarantine occurring. The way QCS combines the QPS results into a single result is via a Boolean equation: (QPS_ID1 ∥ QPS_ID2) && QPS_ID3. This means that either QPS_ID1 or QPS_ID2 must return non-quarantined and QPS_ID3 must return non-quarantined for the result to be non-quarantine. The QCS can be configured to return probation and a probation period instead of quarantine. The QCS can be configured to return non-quarantine when the QPS result is quarantine. In all cases the QCS should put the result into an audit file. The QCS also generates logging information about each SoH validation request and result and store the logging result into an audit file. It is easy for a network administrator to modify this equation to enable or disable a QPS from the checks. This allows an administrator to easily disable a check if an issue occurs with a particular check e.g. disable an AV QPS if there is an issue with the AV policy server.

The QCS is used by the DHCP QES and by the Quarantine Server QES. The QCS is called by a QES even when no SoHs are provided by the QEC. This is to handle the case when the client does not support Quarantining. This allows the QCS to decide on the policy for these clients. The QCS may choose to Quarantine or not Quarantine clients that do not support Quarantining. The decision on whether to do so or not must be configurable by the network administrator. The QCS caches the results from QPSs. When the List of SoHs is the same the same List of SoH Responses, quarantine/non-quarantine/probation is used for a short period of time, the default being 30 seconds. The default time can be changed using a registry variable. If a match on the List of SoH cache is not found, all QPSs who called QCSQPS- >Bind are then called with their SoH (or no SoH if there is no SoH for that QPS_ID). The QCS then runs a timer for Response Timeout milliseconds. If any of the QPSs that are called have not called On ValidateSoHComplete, the QCS will QCS will call On ValidateSoHsComplete with the result so far and the list of SoHResponses so far; otherwise the QCS calls QESTransactionState->OnValidateSoHsComplete when the last expected QPS calls QCSQPS->OnValidateSoHComplete. The QCS must validate the List of SoHs before any other processing. If the validation fails, QCS calls TransactionState->OnValidateSoHsComplete with a failure. The cache stores multiple SoHs for the same QPS, since different clients may have different SoHs depending on the QPC. If the ValidateSoHs request has no List of SoHs, then the QCS sends an empty List of SoHResponses to the client. The QCS packs the Response Information into a buffer to pass to the QES. The QCS is configured with a Quarantine name which is a GUID. This Quarantine Name is passed to the QCC in the QCS SoH Response. The QCS also generates a QCS Name GUID on first execution and includes it in every QCS SoH Response. The QCC uses this GUID to identify different QCSs and tracks information such as the preferred list of QPS_IDs per QCS.

If client is connected to 2 or more networks with different Quarantine names, the QPS on each network may have a different set of checks and so their QPC may have a different SoH. The Quarantine Name is passed to the QPC and the QPC may issue SoHs against a specific Quarantine Name if it supports multiple SoHs for different policy servers. If a QPC only handles a single policy server then it issues SoH without a Quarantine Name. The QCS will call ValidateSoHs on QPSs that have called Bind but the ValidateSoHs call to QPS contains an empty SoH buffer if a SoH is not in the List of SoHs. This allows QPSs to be called even if the QPC is not installed and also supports QPSs that check the client without needing client software e.g. a network IDS. The QPS in this case cannot supply a SoH Response and relies on external information and the TransactionState IF information to decide on the quarantine state of the client.

The QCS looks up the machine object in the AD using the machine name from the QCC SoH. If a machine object exists a Quarantine connectivity exempt variable is checked on the machine object and if the machine is Quarantine connectivity exempt, Non-Quarantine should be returned by the QCS. The Quarantine exempt variable is exposed on the computer account UI in the Active Directory. The QCS handles exemptions only after all other QCS processing e.g. call QPSQCS->ValidateSoH and QCSQPS->OnValidateSoHComplete. The QCS then applies any exemptions. This means that the QPSs can generate SoHResponses for their QPCs. QPSs are registered with QCS at installation via QCSQPS->Register. The Register is via a registry parameter. QCS creates the QPS COM object as an out of proc object. The QCS monitors the registry key and creates new COM objects if added and stops using QPSs if they are deleted from the registry key.

The QES UI for DHCP server contains the UI for the QCS. The configuration parameters set via SetQuarantineConfig are: Quarantine State On/Off/Probation, Probation period, Quarantine Logging enabled, Exempt Non-Quarantine aware clients, Failure URL, and Regular expression based domain name exceptions. Quarantine State On enables the QCS to validate the SoHs. Quarantine State Off disabled the QCS from validating SoHs. The QCS will return Unknown for the compliant state and Connectivity not affected for the connectivity state. Probation enables the QCS to validate the SoHs and returns the correct complaint state but will set the connectivity state to probation for a period of time on the client becoming non-complaint. Probation period is the time a non-complaint client does not have its connectivity affected when the client becomes non-compliant.

The Quarantine Policy Client and Quarantine Policy Server (with the Policy Server) are responsible for implementing a set of checks about the client. The Quarantine Policy Server needs to make a decision on the result of the client checks and report to a Quarantine Coordination Server whether the client checks are ok or not. The checks carried out are dependent on the Quarantine Policy Client. In one embodiment of the invention, the only QPC built into Windows® will be WUS. WUS will only check patch levels against a WUS server which only deploys Microsoft® OS patches. It is possible for a system to include a QPS without a QPC, if the QPS can check the client without requiring a client component, e.g. a network IDS. In this case the QPS responds to the QCS with a Quarantine/Not Quarantine without needing a SoH from a QPC. When such a QPS is used, the QCS calls the QPS but does not provide a SoH. The QPS can then decide the client machine is "Unhealthy".

It is recommended that the QPS returns to the QPC in the SoHResponse the address/name of the policy server that the QPC should contact. The QPC is expected to handle its own communication with its policy server and retry communication when required. It is recommended that the QPS sends a hint to the QPC in the SoHResponse to check its policy with its policy server when the QPS fails a SoH. The QPC is responsible for ensuring the identity of the policy server that they use to obtain policy configuration information. QPC may support multiple policy servers for generating SoH information. Different SoH information should be tracked per QName GUID. This is true for home machines that are configured to get updates from Windows® Update. The QPC should not expect that connectivity to their policy server is available when ProcessSoHResponse is called. An IP address may not have been configured by the time ProcessSoHResponse has been called. The QPC should use IP address notification APIs for this. The QPS should not change any information in TransactionState, it is for query only. It should not increment any reference counts on this COM object. The QPS should return immediately any calls to ValidateSoH and queue these requests internally. If the QPS needs to communicate to its policy server it should not serialize this communication with other ValidateSoH requests. If the QPS cannot queue the ValidateSoH then it should fail the call immediately, the QPS is expected to be able to queue and process a number of these requests in parallel. QPS should be implemented as a multi-threaded apartment.

QPC and QPS need to follow the normal rules for COM installation in registering its interfaces, etc. QPC and QPS do not need to inform QCC or QCS on installation. QCC and QCS will start using a new QPC or QPS when the Bind API on QCCQPC or QCSQPS interfaces are called. QPS install must set the Register and Unregister register keys as follows: The QCS requires the QPSs to inform the QCS via a registry key when it is installed and uninstalled. QCS when it starts and when the registry key is modified uses CoCreateInstance to create an out of proc instance of each QPSQCS interface. **Register** (QPS_ID, Product GUID, QPSQCS CLSID, QPS_READ CLSID): This API is implemented as a registry key. QPS when installed must update this registry key. **Unregister** (QPS_ID): This API is implemented as a registry key. Upon un-installation of a QPC or QPS all detritus on the system, including all COM registration information in the registry and all files should be removed.

WUS client obtains a list of patches that the client should have installed from a WI1S server. The WUS client checks if the patches are installed and if not downloads the patches either from the WUS server or Windowsupdate.com and installs the patches. WUS identifies a client using a signed cookie that is associated with the machine record that in turn contains info on the last sync time. WUS keeps the IP address of the client in the machine record but does not use this for lookup. QCS and QCC gives the QPC and QPS a communication channel, the QPC can send information to identity the client to the QPS and supply status information to the QPS. QPS can supply information to the QPC if required. For WUS the QPS can supply the WUS server name that the WUS client needs to use, if the client failed the QPS checks. This allows a WUS client to be provisioned with the WUS server.

The interaction of the detailed components are now described with reference to Figure 7. The overall interaction works as follows: A QPC notifies the QCC whenever the SoH changes using QCCQPC->NotifySoHChange. The QCC notifies all QECs when the list of SoHs changes using QECQCC->NotifySoHChange. When a QEC needs a list of SoHs it requests the list from the QCC using QCCQEC->QuerySoHs. The QEC sends the SoH list to the QES using a mechanism dependent on the QEC/QES e.g. DHCP uses a DHCP option. For any QPCs that have called QCCQPC->Bind, the QCC calls QPCQCC->QuerySoH, the QCC then adds any additional SoHs from the SoH cache. The QCC then returns the list to the QEC. The QES passes the list of SoHs to the QCS using QCSQES->ValidateSoHs. The QCS splits up the list of SoHs and passes each SoH to the correct QPS using QPSQCS->ValidateSoH. Each QPS validates the client's SoH and returns to the QCS whether the SoH is correct or not. The QPS can optionally request the QCS to pass some information to the QPC in a SoHResponse buffer. The QCS collects all the results from the different QPS and generates a single Quarantine/Not Quarantine result and a list of SoHResponse. The QCS adds its own SoHResponse to the list and passes the result and list to the QES. The QES looks at the Quarantine/No-Quarantine result and enforces Quarantine in an Enforcement specific manner e.g. DHCP does not supply a Default Gateway. The QES passes the list of SoHResponses to the QEC. The QEC passes the list of information clients to the QCC using QCCQEC->ProcessSoHResponses. The QCC splits the list of SoHResponses and passes the correct SoHResponse to the correct QPC using QPCQCC->ProcessSoHResponse. The QCC processes its own SoHResponse. The QCC's SoHResponse contains information about whether the server quarantined the client or not. The QCC uses the Quarantine/Probation/Not Quarantine information to display a message to the user. The communication between the QCC and the QCS via the QEC/QES is unprotected in Maui. The QPC/QPS communication may be protected by the QPC/QPS but this is outside the scope of the Quarantine Platform.

Since DHCP clients request network resources form a network server (DHCP server), the DHCP server can include the QPSs. The QPC and QPS/Policy server e.g. SMS or WUS, will communicate the policy for the client from the server to the client. The QPC will poll the server at administratively defined intervals to see if there are updates. The QPC will notify the QCC whenever the SoH of the machine changes. The QCC notifies all QECs whenever the SoH has changed. When QEC (DHCP client) wants to request for an IP address or a renewal for an IP address, it obtains the SoH from the QPCs and the SoH cache and passes it to the DHCP server using one or more DHCP options. The QES (DHCP Server) gives the list of SoHs to the QCS which passes each SoH to the correct QPS. Each QPS may contact its Policy Server to validate that the SoH for the client is correct and current for that client, e.g. there are no patches to be installed on this client. If the client is current and correct, the QPS returns success to the QCS. If all QPS return success to the QCS, the QCS returns success to the DHCP Server. The DHCP server then returns the correct DHCP options to the DHCP client. The DHCP server will always call the QCS on receiving a Discover, Request or Inform message whether or not the message contains a SoH DHCP option. This allows the QCS to decide how to handle clients that do not support Quarantining. The DHCP QEC must work when communicating with a non-quarantine enabled DHCP server. This is to allow the client to work on a non-Quarantine enabled network.

The PEAP QEC must work when not communicating with quarantine enabled RADIUS servers. This is to allow the client to work on a non-Quarantine enabled network. The PEAP QEC calls QuerySoHs when it needs to supply the SoHs to the RADIUS QES. When this occurs is dependent on the media that PEAP is running on: VPN: PEAP is called when the VPN tunnel is setup. VPN does not re-run PEAP. 802.1 1X: PEAP is called when 802. 1 X needs to authenticate or re-authenticate to the NAS. This may occur multiple times during a communication. Since IPsec clients request network resources directly from another client, the peer IPsec client cannot use the QPSs directly. The QCC must use a Quarantine Server to obtain a BoH. The BoH can take several forms: A Kerberos Ticket used to establish an IPSec SA with the requested server; A Kerberos Ticket may be tied to a Group Policy Object (GPO) applied to a machine by virtue of its membership in a group (a so-called Clean Group) or to an existing non-disabled machine account; An X.509 or XRIIIII, certificate used to establish an IPSec SA. The IPSec policies governing the establishment of the SA are plumbed together with the BoH and must be unplumbed by the client if its state changes such as it is no longer compliant with policy.

If a client is on probation, the X.509 or XRML certificate is valid only for the probation period. If a client is on probation, and Clean Groups are used to manage the distribution ofKerberos tickets two requirements must be supported. A Kerberos ticket must not be valid longer than the probation period. If the client has not provided an updated SoH when probation expires, the QES must take the appropriate steps to remove the client from the Clean Group. The QPC and QPS/Policy server e.g. SMS or WUS, will communicate the policy for the client from the server to the client. The QPC will poll the server at intervals to see if there are updates. The QPC will publish the SoH to the QCC whenever the "State of Health" of the machine changes. The QCC will collect the SoHs from each QPC into a list of SoHs. The QCC notifies all QECs whenever a SoH has changed. The QS client QEC on receiving this notification obtains the list of SoHs and sends it to the Quarantine Server QES. The Quarantine Server QES gives the list of SoHs to the QCS which passes each SoH to the correct QPS. Each QPS may contact its Policy Server to validate that the SoH for the client is correct and current for that client, e.g. there are no patches to be installed on this client. If the client is current and correct, the QPS returns success to the QCS. If all QPSs return success to the QCS, the QCS returns success to the Quarantine Server QES. If certificates are used to establish IPsec SAs, the Quarantine server QES returns a BoH to the QS QEC if the QCS returned success to it. The QS QEC then returns the BoH to the QCC which caches it. If Clean Groups are used, the QES will add the client to the Clean Group, and return QUAR_SUCCESS to the client.

If this is the first validation of this particular client, the client may now go ahead and request a TGT from the TGS. If the client already has a TGT and the client fails the policy check, the QES must remove the client from the Clean Group and notify the TGS that this client is no longer compliant with policy. It is highly recommended that a TGT is not valid beyond the validity of the policy compliance, and hence that no SGTs issued from that TGT are valid beyond that period. The QCC then sends a notification to all QECs that the BoH has changed. When IPsec is requested to setup an IKE SA to a peer, it obtains the BoH from the BoH cache and passes it to the peer IPsec if certificates are used to represent the BoH. If Clean Groups are used, the client will use a TGT to request an SGT in the usual way and then establish the SA using the ticket. The peer IPsec passes the BoH/ticket to the QCS who validates it and returns success to the peer IPsec, who then accepts the remote IKE communication.

The foregoing description of various embodiments of the invention has been presented for purposes of illustration and description. It is not intended to be exhaustive or to limit the invention to the precise embodiments disclosed. Numerous modifications or variations are possible in light of the above teachings. The embodiments discussed were chosen and described to provide the best illustration of the principles of the invention and its practical application to thereby enable one of ordinary skill in the art to utilize the invention in various embodiments and with various modifications as are suited to the particular use contemplated. All such modifications and variations are within the scope of the invention as determined by the appended claims when interpreted in accordance with the breadth to which they are fairly, legally, and equitably entitled.

## Claims

1. A network quarantine client for interacting with a server enforcing a quarantine policy, comprising:
at least one enforcement client for communicating with the server through a network protocol; and
a coordinating client for acquiring at least one statements of health from at least one policy client, wherein the coordinating client exposes an interface through which the at least one policy client communicates with the coordinating client, and wherein the coordinating client assembles the at least one statements of heath into statement of health list and provides the at least one enforcement client with the statement of health list.

2. The network quarantine client of claim 1, wherein the at least one enforcement client uses the statement of health list to gain access to network resources from the server.

3. The network quarantine client of claim 1, wherein the at least one enforcement client is one of a Dynamic Host Control Protocol client, a Virtual Private Network client, and an IPsec client.

4. The network quarantine client of claim 1, wherein the coordinating client communicates with the at least one policy client through an interface provided by the at least one policy client.

5. The network quarantine client of claim 1, wherein the coordinating client and enforcement client are comprised in an operating system of a computer.

6. The network quarantine client of claim 1, wherein the at least one policy client acquires a network policy from at least one policy server, and generates a statement of health indicating that a host computer is in compliance with the network policy.

7. A computer-readable medium including computer-readable instructions for executing the method of claim 1.

8. A method for a client to comply with a network quarantine policy, comprising:
acquiring a policy from one or more policy servers;
executing a system diagnostic to determine if the client is in compliance with an acquired policy;
if the client fails to comply with an acquired policy, correcting a security state of the client;
generating a list of statements of health, each statement of health indicating the client is in compliance with a corresponding policy; and
transmitting the list of statements of health to a quarantine server for validation.

9. The method of claim 8, wherein correcting a security state of the client includes downloading a software patch from a fix-up server.

10. The method of claim 8, wherein each statement of health is generated by a policy client responsible for determining whether the client is in compliance with a specified policy.

11. The method of claim 8, further comprising receiving a bill of health from the quarantine server if the list of statements of health is validated, wherein the bill of health indicates to the quarantine server and other computers on a network that the client is in compliance with a security policy for the network.

12. The method of claim 8, wherein the list of statements of health is transmitted to the quarantine server by a protocol enforcement client, wherein the protocol enforced by the protocol enforcement client is one of a Dynamic Host Control Protocol, a Virtual Private Network protocol, an IPsec protocol, and an IEEE 802.1 X protocol.

13. A computer-readable medium including computer-readable instructions for executing the method of claim 8.

14. A network quarantine server for enforcing a network quarantine policy, comprising:
at least one enforcement server for communicating with at least one client through a network protocol; and
a coordinating server for receiving a list of statements of health, including at least one statement of health, from the enforcement server and querying at least one policy server to verify the at least one statement of health.

15. The network quarantine server of claim 14, wherein, if each statement of health is verified, the coordinating server instructs the at least one enforcement server to grant the at least one client access to network resources.

16. The network quarantine server of claim 14, wherein, if each statement of health is not verified, the coordinating server instructs the at least one enforcement server to enforce a quarantine policy acquired from the at least one policy server.

17. The network quarantine server of claim 14, wherein the coordinating server exposes an interface through which the at least one policy server communicates with coordinating server.

18. The network quarantine server of claim 14, wherein the coordinating server communicates with the at least one policy server through an interface provided by the at least one policy server.

19. A method for network quarantine management, comprising:
receiving from a remotely located Dynamic Host Control Protocol (DHCP) server a bill of health acquired from a client requesting a network resource, the bill of health reflecting the system state of the client;
validating the bill of health;
if the statement of health is valid, instructing the DHCP server to grant the request; and
if the statement of health is invalid, instructing the DHCP server not grant the request and to place the client in quarantine.

20. A computer-readable medium including computer-readable instructions for executing the method of claim 19.
